**Europäisches Patentamt**

**European Patent Office**

**Office européen des brevets**

(19)

(11) Numéro de publication : **0 452 422 B1**

(12)

# FASCICULE DE BREVET EUROPEEN

(45) Date de publication du fascicule du brevet :
**01.09.93 Bulletin 93/35**

(51) Int. Cl.⁵ : **G01B 11/00,** B25J 19/02,
**G01B 11/24**

(21) Numéro de dépôt : **90903599.0**

(22) Date de dépôt : **05.02.90**

(86) Numéro de dépôt international :
**PCT/FR90/00090**

(87) Numéro de publication internationale :
**WO 90/08939 09.08.90 Gazette 90/19**

(54) **PROCEDE D'ETALONNAGE D'UN SYSTEME D'ACQUISITION TRIDIMENSIONNELLE DE FORME ET SYSTEME POUR LA MISE EN OEUVRE DUDIT PROCEDE.**

(30) Priorité : **06.02.89 FR 8901595**

(43) Date de publication de la demande :
**23.10.91 Bulletin 91/43**

(45) Mention de la délivrance du brevet :
**01.09.93 Bulletin 93/35**

(84) Etats contractants désignés :
**AT BE CH DE DK ES FR GB IT LI LU NL SE**

(56) Documents cités :
**EP-A- 0 091 132
EP-A- 0 177 038
PROCEEDINGS OF THE IEEE COMPUTER
SOCIETY CONFERENCE ON COMPUTER
VISION AND PATTERN, 22-26 June 1986,
Miami Beach, Florida, IEEE, M. ITO et al.:
"Range and shape measurement using
three-view stereo analysis ", pages 9-14**

(73) Titulaire : **SA KREON INDUSTRIE
Route des Usines
F-65300 Lannemezan (FR)**

(72) Inventeur : **BRUNET, Michel
34, rue de la Bourdette
F-31130 Balma (FR)**
Inventeur : **COSNARD, Eric Barbe d'Or
Cidex 4107 Lapeyrouse-Fossat
F-31180 Castelmaurou (FR)**
Inventeur : **DELTOUR, Bernard
5, rue d'Andorre
F-31120 Pinsaguel (FR)**

(74) Mandataire : **Rodhain, Claude et al
Cabinet Claude Rodhain 30, rue la Boétie
F-75008 Paris (FR)**

EP 0 452 422 B1

## Description

L'invention concerne un procédé d'étalonnage d'un système d'acquisition de forme possédant un ensemble-capteur mobile, apte à délivrer les coordonnées absolues (x,y,z) représentatives de la forme d'un objet tridimensionnel dans un référentiel dit absolu (X,Y,Z) ; le procédé de l'invention vise à établir la fonction de transfert globale entre des informations, dites brutes, délivrées par l'ensemble-capteur du système d'acquisition et les coordonnées réelles (x,y,z) de la surface de l'objet en cours d'acquisition. L'invention s'étend au système d'acquisition permettant la mise en oeuvre du procédé visé, système d'acquisition du type comprenant un bâti fixe auquel est lié le référentiel absolu, un organe terminal mobile auquel est lié un référentiel dit terminal (R,S,T), un jeu d'actionneurs adapté pour mouvoir l'organe terminal par rapport au bâti fixe, des moyens (18, 7c, 6a, 6b, 5a) de détermination de la position et de l'orientation du terminal par rapport au bâti fixe apte à mémoriser une matrice $M_{AT}$ de passage du référentiel terminal (R,S,T) au référentiel absolu (X,Y,Z), l'ensemble capteur sus-évoqué porté par l'organe terminal et adapté pour émettre vers l'objet tridimensionnel une onde structurée c'est à dire un faisceau de forme connue et pour capter l'écho renvoyé par ledit objet, et des moyens de stockage des informations issues de l'ensemble-capteur dites informations brutes, représentatives des échos captés.

On connaît de tels systèmes d'acquisition (également désigné parfois sous le terme : système de numérisation ou "C.M.M." : "Coordinates Mesuring Machine") qui sont en particulier utilisés dans les tomographes, échographes, scanners, etc... Dans la plupart de ces systèmes, l'ensemble-capteur comprend un système d'éclairage apte à émettre au moins un faisceau lumineux vers l'objet et un dispositif vidéo apte à filmer l'objet avec une parallaxe constante par rapport aux faisceaux du système d'éclairage en vue de délivrer des informations brutes (p,q) fonction des colonnes (p) et lignes (q) des images des points de la trace de chaque faisceau sur l'objet. Dans les brevets FR 76.06176, FR 79.28885, FR 81.24418, WO 87/01194, EP 0.163.076, EP 0.222.498, le ou les faisceaux du système d'éclairage sont de type lamellaire (plan laser notamment) et le système numérise l'intersection de chaque plan laser avec l'objet.

Ces systèmes posent un problème mal résolu à l'heure actuelle qui est de relier les informations brutes délivrées par l'ensemble-capteur (qui sont dépendantes de ce dernier) aux positions réelles des points de la surface de l'objet (indépendamment de l'ensemble-capteur qui a permis d'effectuer le relevé), c'est-à-dire d'élaborer à partir de ces informations brutes les coordonnées métriques de ces points dans un référentiel déterminé.

Les systèmes connus, notamment du type sus-évoqué, réalisent la liaison entre les informations brutes et les coordonnées réelles des points par une connaissance préalable de la géométrie du système d'éclairage par rapport au dispositif vidéo (détermination préalable de la parallaxe, de la focale de l'objectif, des caractéristiques de l'élément photosensible...). Ces systèmes nécessitent donc la mesure de l'ensemble de ces paramètres pour les étalonner, ce qui est en pratique difficile et source d'erreurs et conduit à des calculs trigonométriques complexes avec cumul des erreurs. La fonction de transfert entre les information: brutes et les coordonnées réelles est ainsi approximative. De plus, pour obtenir les coordonnées absolues des points de la surface, il faut définir à tous moments les caractéristiques de position de l'ensemble-capteur (mobile) par rapport au référentiel absolu lié au bâti et les systèmes d'acquisition connus ne peuvent effectuer ce passage que pour des mouvements simples des actionneurs, correspondant à des déplacements relatifs de l'ensemble-capteur simples et parfaitement définis (rotation ou translation unique de l'ensemble-capteur par rapport à l'objet). Cette limitation appauvrit le champ des mesures que le système peut effectuer, et ceci peut être un inconvénient majeur pour des objets de forme complexe.

L'invention se propose de fournir un nouveau procédé d'étalonnage permettant de s'affranchir des défauts sus-évoqués des systèmes connus d'acquisition de forme.

Un objectif de l'invention est en particulier de fournir un étalonnage indépendant de la structure interne de l'ensemble-capteur et qui, par conséquent, n'exige pas une mesure préalable physique des paramètres géométriques de celle-ci.

Un autre objectif est de permettre un passage au référentiel absolu lié au bâti, sans avoir à connaître les caractéristiques de fixation ou de bridage de l'ensemble-capteur sur le terminal mobile qui le porte.

L'invention vise ainsi à élargir les mouvements possibles du système, l'ensemble-capteur pouvant être embarqué (de façon non connue en soi) sur n'importe quel organe terminal mobile (robot, machine-outil...) dont la cinématique est elle-même prédéfinie.

A cet effet, le procédé d'étalonnage d'un système d'acquisition de forme du type défini précédemment, en vue d'établir la fonction de transfert globale entre les échos renvoyés et les coordonnées absolues correspondantes (x,y,z), que doit délivrer le système d'acquisition, consiste :

. à mémoriser préalablement des informations de définition géométrique, relatives à une mire de calibration présentant un ou des reliefs de géométrie et dimensions connues,

. à réaliser l'acquisition de la forme de ladite mire de calibration au moyen de l'ensemble-capteur disposé dans au moins une position déterminée par rapport à ladite mire, dite position(s) de calibration, en vue de mémoriser les informations brutes (p, q...) correspondantes représentatives des échos de la mire captés par ledit ensemble-capteur,

. à transposer, pour chaque position de calibration précitée, les informations de définition de la mire de calibration sous la forme de coordonnées (u,v,w) dans un référentiel lié au capteur dit référentiel capteur (U,V,W),

. à calculer, à partir des résultats de l'acquisition précitée et des coordonnées (u,v,w) caractéristiques de la mire dans le référentiel capteur, une fonction de transfert intermédiaire :

$$N \quad \begin{cases} u = F\ (p,q\ldots) \\ v = G\ (p,q\ldots) \\ w = H\ (p,q\ldots) \end{cases}$$

donnant les coordonnées (u,v,w) dans le référentiel capteur (U,V,W) en fonction des informations brutes (p,q),

. à définir la position du référentiel capteur (U,V,W) dans le référentiel terminal (R,S,T) et à mémoriser une matrice $M_{TC}$ de passage du référentiel capteur au référentiel terminal,

. à composer la fonction de tranfert intermédiaire N avec, d'une part, la matrice de passage $M_{TC}$, d'autre part, la matrice de passage $M_{AT}$, et à d'obtenir la fonction de transfert globale $L = M_{AT}.M_{TC}.N$

Ainsi, dans le procédé de l'invention, on remplace la connaissance des paramètres géométriques de l'ensemble-capteur (qui sont difficiles et imprécis à mesurer) par celle d'une mire de calibration simple et facile à coter de façon précise. L'établissement de la fonction de transfert intermédiaire s'effectue directement par une acquisition d'informations brutes dans les mêmes conditions que les mesures ultérieures des points d'un objet, de sorte que l'on supprime ainsi les cumuls d'erreurs (puisque les erreurs de la mesure réelle sont compensées par celles, identiques, réalisées lors de l'acquisition de la mire de calibration).

La mire de calibration peut en particulier être très simplement constituée par une plaque portant sur une face un maillage de piges : les informations de définition de la mire se ramènent alors aux coordonnées $(u_k,v_k)$ de chaque pige dans un référentiel mire (U,V) contenu dans le plan de la face de la mire portant le maillage de piges.

Dans le cas d'un maillage carré, une seule information suffit, à savoir le pas de la maille.

Il est également possible de constituer une mire de calibration virtuelle à partir d'une pige unique, en disposant l'ensemble-capteur dans plusieurs positions de calibration connues, en mémorisant comme informations de définition, des coordonnées $(u_k, v_k)$ attachées à la pige unique pour les différentes positions de calibration dans un référentiel (U, V) lié à l'ensemble-capteur, en mémorisant les informations brutes (p, q...) représentatives des échos de la pige unique captés par l'ensemble-capteur dans ses différentes positions de calibration et en composant ces informations brutes en vue de constituer un maillage virtuel représentant la mire de calibration virtuelle.

Ce mode de mise en oeuvre simplifie encore la réalisation matérielle de la mire, en utilisant les déplacements mécaniques de l'ensemble-capteur.

Par la suite, par "mire de calibration", on entend aussi bien la mire matérielle à plusieurs piges que la mire virtuelle élaborée comme ci-dessus indiqué à partir d'une seule pige.

Par ailleurs, selon un premier mode de mise en oeuvre, la matrice $M_{TC}$ de passage du référentiel capteur (U,V,W) au référentiel terminal est définie :

. en fixant la mire de calibration sur le bâti fixe dans une position prédéterminée connue et en mémorisant les données correspondantes,

. en définissant et mémorisant, à partir de ces données, une matrice $M_{AC}$ de passage du référentiel capteur (U,V,W) au référentiel absolu (X,Y,Z) pour la position de calibration,

. en mémorisant la matrice $M_{AT}$ délivrée par les moyens de détemination dans la position de calibration, matrice notée $M_{ATO}$,

. et en calculant la matrice $M_{TC}$ à partir des matrices précitées : $M_{TC} = (M_{ATO})^{-1}.M_{AC}$

Ainsi dans ce mode de mise en oeuvre, la référence absolue est donnée par une fixation précise et parfaitement connue de la mire de calibration sur le bâti, fixation qui peut être garantie sans difficulté par des positionnements mécaniques connus.

Toutefois, cette contrainte de fixation précise de la mire peut être évitée en mettant en oeuvre une autre procédure de définition de la matrice $M_{TC}$ consistant :

- à réaliser l'acquisition d'au moins un point caractéristique d'une mire de référence dans -$\ell$- positions de l'ensemble-capteur, en vue d'acquérir les informations brutes ($p_l$, $q_l$..., $p_k$, $q_k$..., $p_\ell$, $q_\ell$) représentatives des échos correspondants,
- à calculer au moyen de la fonction de transfert intermédiaire N, les coordonnées correspondantes ($u_l$, $v_l$, $w_l$..., $u_k$, $v_k$, $w_k$... $u_l$, $v_l$, $w_l$) dans le référentiel-capteur,
- à mémoriser les matrices ($M_{ATl}$...,$M_{ATk}$..., $M_{AT\ell}$) délivrées pour chacune des positions d'acquisition par les moyens de détermination,
- à résoudre le système d'équations suivants en vue de calculer l'inconnue $M_{TC}$ :

$$\begin{vmatrix} x_o \\ y_o \\ z_o \end{vmatrix} = \begin{bmatrix} M_{ATk} \end{bmatrix} \cdot M_{TC} \begin{vmatrix} u_k \\ v_k \\ w_k \end{vmatrix} \qquad 1 \leqslant k \leqslant \ell$$

où

$$\begin{vmatrix} x_o \\ y_o \\ z_o \end{vmatrix}$$

sont les coordonnées inconnues du point caractéristique de la mire, éliminées par substitution dans la résolution du système d'équations.

Il est à noter que la mire de référence peut être constituée par la mire de calibration elle-même dont certaines piges servent de points de référence.

Dans ce mode de mise en oeuvre, la connaissance du positionnement mécanique de la mire est remplacée par une série d'acquisitions de points caractéristiques, effectuées dans des positions différentes obtenues par le mouvement des actionneurs, dans les mêmes conditions que sont effectuées les mesures réelles sur un objet ; ce positionnement quelconque de la mire donne une souplesse plus grande au procédé (système d'acquisition transportable, possibilité de lier la mire à l'objet à mesurer... ).

Dans le cas d'un système d'acquisition dans lequel l'ensemble-capteur comprend un système d'éclairage apte à émettre au moins un faisceau lumineux lamellaire vers l'objet et un dispositif vidéo apte à filmer l'objet avec une parallaxe constante par rapport aux faisceaux du système d'éclairage en vue de délivrer des informations brutes (p,q) fonction des colonnes (p) et lignes (q) des images des points de la trace de chaque faisceau sur l'objet ou la mire de calibration, la fonction de transfert intermédiaire N peut être exprimée sous forme linéaire, ou sous forme non linéaire de développement limité, ou encore en divisant la mire de calibration en zones élémentaires traitées de façon linéaire ou non, ou encore en effectuant une correction des distorsions du système au moyen d'une table de linéarisation.

La forme linéaire est suffisante lorsque les focales des dispositifs vidéo sont suffisamment grandes pour limiter les aberrations optiques. La forme non linéaire permet de prendre en compte des dispositifs vidéo présentant des distorsions importantes ou des optiques avec anamorphose.

Si ces distorsions sont faciles à caractériser ou fournies par construction, les corrections par table de linéarisation seront préférables.

Pour certaines applications ne nécessitant pas une compensation fine des non-linéarités, la division par zones élémentaires représente un bon compromis précision/simplicité de calcul.

Pour limiter lors des mesures d'étalonnage l'erreur de quantification due à la résolution de l'ensemble-capteur, le calcul de la fonction de transfert intermédiaire (N) et le calcul de la matrice $M_{TC}$ de passage du référentiel capteur au référentiel terminal s'effectuent de préférence en établissant des systèmes d'équations redondants et en les résolvant au sens des moindres carrés.

L'invention s'étend à un système d'acquisition du type précédemment défini, doté de moyens d'étalonnage permettant la mise en oeuvre du procédé sus-visé :
- une mire de calibration présentant des reliefs de géométrie et dimensions connues,
- des moyens de fixation de la mire de calibration sur le bâti,
- des moyens de mémorisation comprenant une zone-mémoire pour les informations de définition géométrique relatives à la mire de calibration et une zone-mémoire pour la matrice ($M_{TC}$) de passage du référentiel capteur au référentiel terminal,

- et un calculateur adapté et programmé pour réaliser la transposition en coordonnées des informations de définition géométrique, pour calculer la fonction de transfert intermédiaire N , et pour calculer par composition la fonction de transfert globale L .

Dans le cas d'un étalonnage où la matrice $M_{TC}$ est calculée à partir des informations de position de la mire de calibration, le système présente en outre les caractéristiques suivantes :

. les moyens de fixation de la mire de calibration sont adaptés pour assurer la fixation de ladite mire dans une position prédéterminée connue par rapport au bâti,

. les moyens de mémorisation comprennent une zone-mémoire pour les données de position correspondantes de ladite mire, et une zone-mémoire pour la matrice $M_{AC}$ de passage du référentiel capteur au référentiel absolu,

. le calculateur est adapté et programmé pour définir la matrice $M_{AC}$ et pour calculer la matrice $M_{TC}$ à partir des matrices $M_{AC}$ et $M_{ATO}$.

Dans le cas d'un étalonnage où la matrice $M_{TC}$ est calculée à partir de différentes positions de l'organe terminal, le système présente les caractéristiques suivantes :

. ledit système comprend une mire de référence présentant au moins un point caractéristique et des moyens de fixation de la mire de référence sur le bâti,

. les moyens de mémorisation comprennent une zone-mémoire pour les matrices $M_{ATi}$... $M_{AT\ell}$,

. le calculateur est adapté et programmé pour résoudre le système d'équations en $M_{TC}$.

D'autres caractéristiques, buts et avantages de l'invention ressortiront de la description qui suit en référence aux dessins annexés, lesquels illustrent à titre d'exemples non limitatifs des modes de mise en oeuvre du procédé d'étalonnage de l'invention et un mode de réalisation d'un système d'acquisition. Sur ces dessins qui font partie intégrante de la présente description :

- la figure 1 est une vue en perspective d'un système d'acquisition conforme à l'invention en l'exemple d'un robot 6 axes,
- la figure 1a présente une variante de mire de calibration (cas des grosses piges),
- la figure 1b illustre la constitution d'une mire de calibration virtuelle à partir d'une pige unique,
- la figure 2 est une vue de détail en coupe partielle de l'ensemble-capteur fixé sur l'organe terminal dudit système,
- la figure 3 est un synoptique général de fonctionnement du système d'acquisition en mode mesure,
- la figure 4 est une vue en perspective du robot en cours d'étalonnage (procédure de calibration),
- la figure 5a est un logigramme illustrant le logiciel de calcul dans le cas d'une fonction de transfert intermédiaire linéaire, et la figure 5b est une illustration dans ce cas de l'écho de la mire de calibration,
- la figure 5c est une illustration de l'écho de la mire de calibration dans le cas des grosses piges (figure 1a),
- la figure 6 explicite l'algorithme de transposition, élaboration des équations et résolution dans le cas linéaire de la figure 5a,
- la figure 7a est un logigramme illustrant le logiciel de calcul dans le cas d'une fonction intermédiaire non linéaire, et la figure 7b est une illustration de l'écho,
- les figures 8a et 8b sont des représentations similaires dans le cas d'une fonction de transfert intermédiaire défini par zones élémentaires,
- les figures 9a, 9c sont des représentations similaires dans le cas d'une fonction de transfert intermédiaire corrigée par table de linéarisation, la figure 9b représentant l'écho non corrigé,
- la figure 10 est une vue en perspective partielle du système en cours d'étalonnage (procédure de prise de référence) avec représentation des échos en cours de procédure,
- la figure 11 est un logigramme illustrant le logiciel de résolution du système d'équations en $M_{TC}$,
- la figure 12 est un schéma illustrant la modélisation de la chaîne cinématique du robot, représentée par la matrice $M_{AT}$ de passage du référentiel terminal au référentiel absolu.

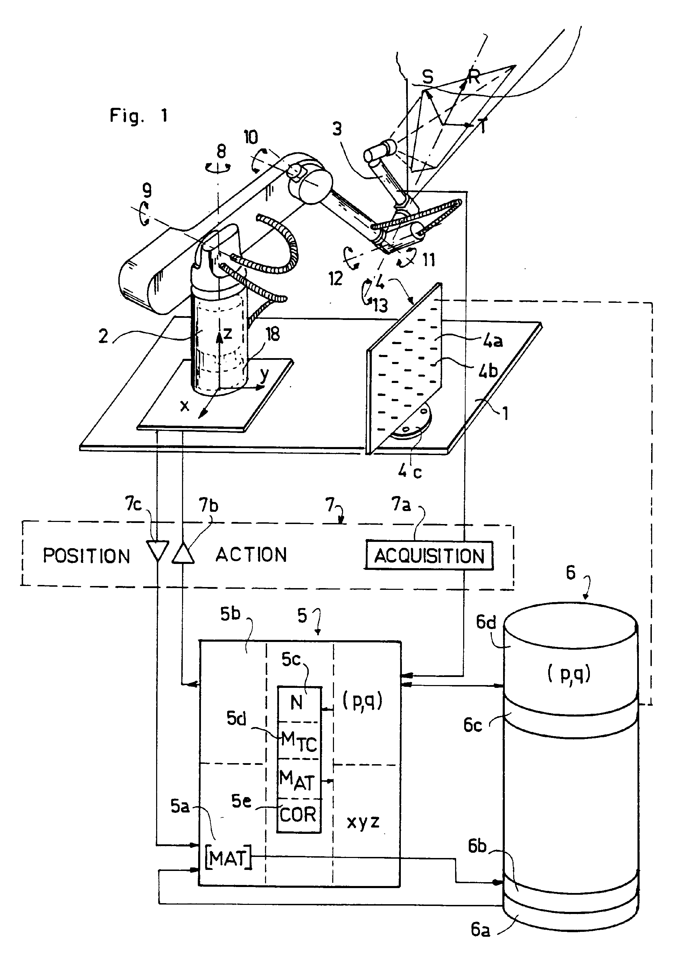

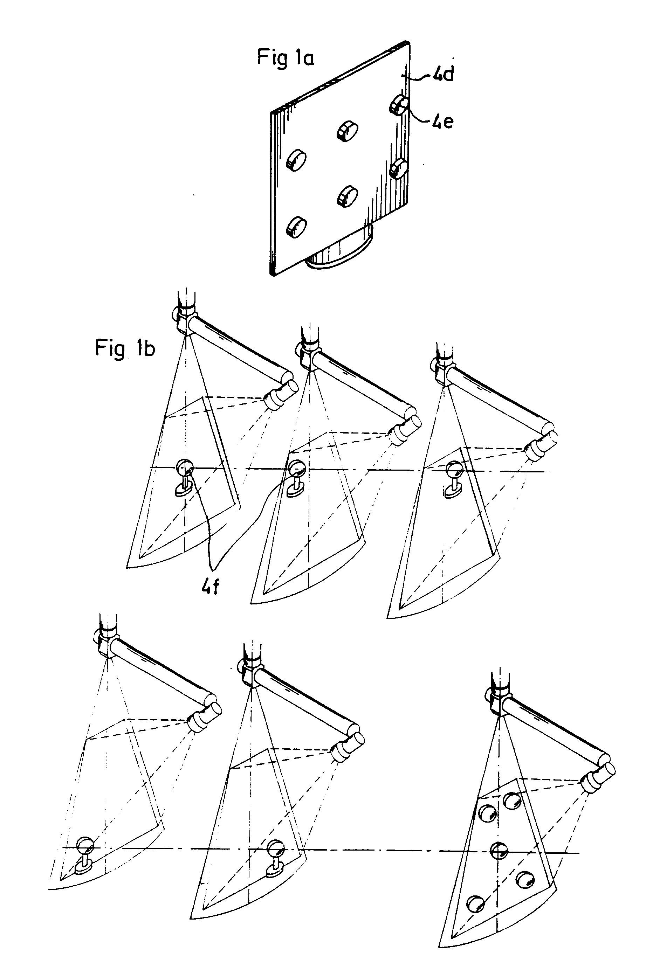

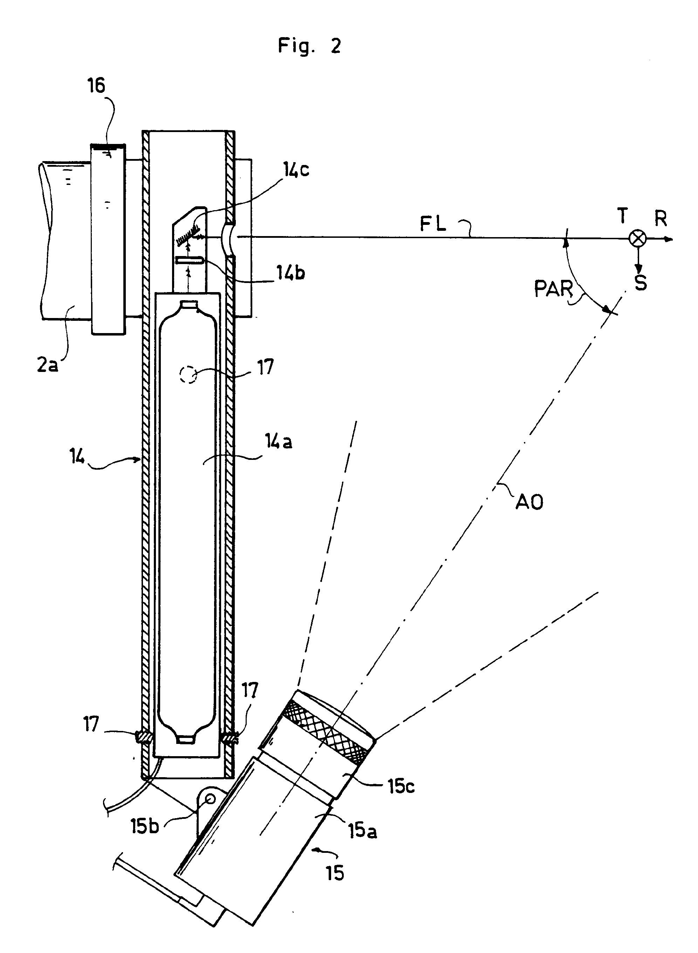

Le système d'acquisition de forme représenté à titre d'exemple aux figures 1 et 2 comprend sept ensembles essentiels :

- un bâti fixe 1,
- un robot six axes 2 solidaire du bâti fixe et pourvu d'un organe terminal 2a,
- un ensemble-capteur 3 porté par l'organe terminal 2a,
- une mire de calibration 4 elle-même solidaire du bâti fixe 1 et qui, en l'exemple, fait également office de mire de référence comme on le verra plus loin,
- un calculateur 5,
- des moyens de mémorisation 6 associés au calculateur 5,

- et une interface électronique 7 entre l'ensemble robot/capteur et le calculateur.

Le robot 2 est en lui-même de type classique, comprenant un jeu d'actionneurs constitué par une chaîne cinématique de moteurs, en l'exemple au nombre de six : 8, 9, 10, 11, 12 et 13, permettant six rotations autour de six axes-moteurs. Chaque moteur est associé à un capteur de position angulaire notamment de type incrémental tel que capteur 18, qui délivre des impulsions représentatives de la rotation du moteur visé. Le moteur 8 est solidaire du bâti auquel est lié un référentiel dit absolu (X, Y, Z) par rapport auquel le système exprime les coordonnées des points de la forme à acquérir, cependant que le moteur 13 porte l'organe terminal 2a du robot auquel est lié un référentiel dit terminal (R, S, T) dont l'axe R est confondu avec l'axe de ce moteur.

L'ensemble capteur 3 comprend un système d'éclairage 14 et un dispositif vidéo 15. Le système d'éclairage 14 est en l'exemple constitué par un tube laser hélium-néon basse puissance 14a associé à une optique cylindrique 14b et un miroir de renvoi 14c afin d'émettre un faisceau lamellaire FL. Le système d'éclairage 14 est monté sur l'organe terminal par un mandrin à baïonnette 16 et est doté de moyens de réglage 17 permettant d'ajuster la position du faisceau lamellaire. En l'exemple, la position de ce faisceau est réglée pour que celui-ci coïncide avec le plan RT du référentiel terminal (R, S, T).

Le dispositif vidéo 15 comprend une caméra vidéo C.C.D. 15a dont le boîtier est articulé par une charnière 15b sur le système d'éclairage 14, de façon que l'axe optique AO de prise de vue présente une parallaxe constante PAR par rapport au faisceau lumineux FL et que la caméra ait un champ lui permettant de filmer la trace laser sur l'objet éclairé. La caméra 15a est équipée d'un objectif 15c muni d'un filtre interférentiel accordé sur la longueur d'onde du faisceau lumineux.

La caméra 15 délivre un signal vidéo vers l'interface électronique 7. Cette dernière est dotée d'une carte d'acquisition 7a qui, à partir du signal vidéo, engendre et mémorise dans une zone-mémoire 6d des informations brutes (p, q) représentatives des échos captés par la caméra, c'est-à-dire de l'image de la trace du faisceau lumineux FL sur l'objet examiné. Cette carte est en elle-même connue et peut être du type décrit dans le brevet FR 2.519.138 ; elle délivre vers le calculateur 5 des informations (p, q) fonction des colonnes (p) et lignes (q) des images des points de la trace.

Le calculateur 5 possède un module 5b de commande de trajectoire qui, par l'entremise d'un amplificateur de puissance 7b de l'interface 7, commande les rotations des moteurs 8-13 du robot et donc la position et l'orientation de l'organe terminal 2a par rapport au bâti 1.

L'interface comprend, en outre, des moyens de comptage 7c des signaux issus des capteurs 18 qui délivrent vers le calculateur des informations représentatives de la position des moteurs. Les moyens de mémorisation 6 comprennent une zone-mémoire 6a dans laquelle sont stockées des données relatives à l'agencement mécanique du robot (longueur des bras, agencement angulaire des axes de moteurs, fins de course...). Le calculateur 5 comprend un module de calcul 5a programmé pour engendrer, à chaque instant, à partir des informations issues des moyens de comptage 7c et des informations stockées dans la zone-mémoire 6a, une matrice $M_{AT}$ de passage du référentiel terminal (R, S, T) au référentiel absolu. Cette procédure robotique et les calculs matriciels correspondants sont eux-mêmes connus et ne seront pas davantage détaillés. Cette matrice est stockée dans une autre zone-mémoire 6b des moyens de mémorisation.

Les capteurs de position angulaire 18, les moyens de comptage 7c, les zones-mémoires 6a et 6b et le module de calcul 5a sont désignés de la façon habituelle sous l'expression générique : moyens de détermination de la position et de l'orientation du terminal par rapport au bâti fixe dont la finalité est d'engendrer et de mémoriser la matrice $M_{AT}$ précitée.

La mire de calibration 4 présente des reliefs de géométrie et de dimensions connues, préalablement mémorisées dans une zone-mémoire 6c des moyens de mémorisation. Selon les applications envisagées, il est possible de prévoir plusieurs types de maillages de la mire.

En l'exemple de la figure 1, la mire est une plaque 4a portant sur une face un maillage 4b de piges, chacune constituée par un téton cylindrique de diamètre faible tel que l'interception par le laser donne un éclat lumineux correspondant à 1, 2 ou 3 pixels maximum de la caméra. Dans ce cas (dit cas de petites piges), le nombre de piges peut aller de 9 à 25 piges, les piges centrales (entre 3 et 9) servant de points de références caractéristiques.

En l'exemple de la figure 1a, la mire est une plaque 4d portant sur une face un maillage 4e de 4 à 5 piges chacune constituées par un téton cylindrique de diamètre assez important, tel que l'interception par le laser donne un éclat lumineux correspondant à un arc de cercle constitué d'au moins 20 à 30 pixels caméra. Dans ce cas (dit cas des grosses piges), la première phase de calibration consistera à rechercher, au sens des moindres carrés, les cercles de diamètre connu correspondant au mieux aux arcs de cercle numérisés par la caméra. Les points caractéristiques de la mire sont alors les centres des cercles reconstitués.

Par ailleurs, comme l'illustre la figure 1b, il est possible de constituer une mire de calibration virtuelle à partir d'une pige unique 4f. Les schémas successifs de la figure 1b représentent différentes positions de l'ensemble-capteur par rapport à la pige, dans le cas où le plan laser est parallèle à un des axes de déplacement

EP 0 452 422 B1

de la chaîne cinématique. L'enregistrement et la superposition des différentes images prises dans les différentes positions connues du capteur (dite positions de calibration) permettent de constituer un maillage virtuel représentant la mire de calibration virtuelle et de se ramener aux cas précédents d'une mire matérielle.

La mire de calibration 4 est fixée sur le bâti 1 à l'aide de moyens de fixation, tel que socle de mire 4c boulonné sur ledit bâti, en position telle que le faisceau lumineux lamellaire de l'ensemble-capteur 3 puisse être positionné parallèlement au plan de la plaque 4a de mire, de façon à intercepter les piges 4b de celle-ci. Pour la procédure de calibration qui est la première étape du procédé d'étalonnage, un référentiel dit référentiel capteur (U, V, W) est lié au faisceau lamellaire pour avoir une position prédéterminée par rapport à la mire dans cette position de calibration.

Dans l'exemple visé, la mire de calibration est fixée sur le bâti dans une position fixe mais qui n'a pas à être connue de façon précise, en raison de la procédure de prise de référence qui est mise en oeuvre comme visé plus loin. Il est à noter que, dans un autre mode de mise en oeuvre du procédé d'étalonnage, cette procédure de prise de référence peut être supprimée au prix d'une fixation précise et connue de la mire de calibration sur le bâti comme on le verra plus loin.

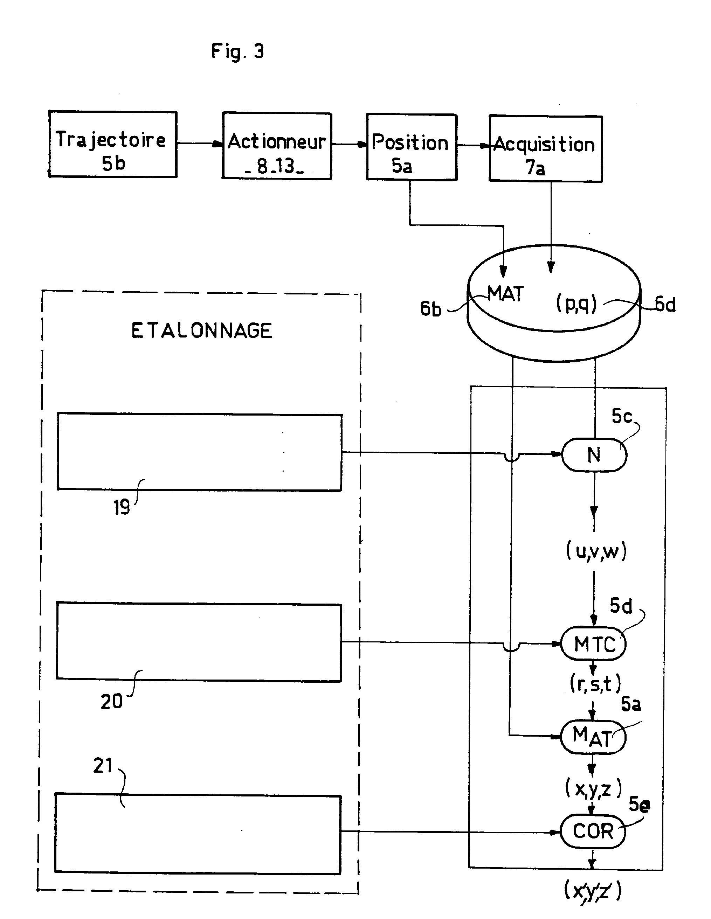

La figure 3 est un synoptique montrant le déroulement d'une mesure après étalonnage du système. Le procédé d'étalonnage permet :

. par l'entremise de moyens de calibration 19 d'élaborer et de mémoriser dans une mémoire 5c du calculateur une fonction de transfert intermédiaire N consistant à une opération programmée contenue dans ledit calculateur,

. par l'entremise de moyens de prise de référence 20, d'élaborer et de mémoriser dans une mémoire 5d du calculateur une matrice $M_{TC}$ de passage du référentiel capteur (U, V, W) au référentiel terminal (R, S, T),

. le cas échéant, par des moyens de caractérisation mécanique 21, d'élaborer et de mémoriser dans une mémoire 5e du calculateur une matrice COR de correction des défauts mécaniques.

La mesure d'un objet, c'est-à-dire l'acquisition des coordonnées de différents points de sa surface, s'effectue par le processus suivant :

. programmation d'une trajectoire du robot par le module de commande 5b en vue d'éclairer la surface de l'objet à acquérir,

. exécution par les moteurs 8-13 des mouvements correspondants,

. pour chaque position de la trajectoire, stockage des informations brutes captées (p, q) dans la mémoire 6d,

. mémorisation dans la zone-mémoire 6b de la matrice $M_{AT}$ engendrée par les moyens de détermination de la position et de l'orientation du terminal par rapport au bâti fixe,

. application sur les informations brutes (p, q) de la fonction de transfert intermédiaire N pour obtenir les coordonnées (u, v, w) du point correspondant de l'objet dans le référentiel capteur (U, V, W),

. application de la matrice de passage $M_{TC}$ sur ces coordonnées (u, v, w) pour obtenir les coordonnées correspondantes (r, s, t) dans le référentiel terminal (R, S, T),

. application de la matrice de passage $M_{AT}$ sur ces coordonnées (r, s, t) pour obtenir les coordonnées correspondantes (x, y, z) dans le référentiel absolu (X, Y, Z),

. le cas échéant, correction de ces coordonnées (x, y, z) par application de la matrice de correction COR.

La description qui suit illustre le procédé d'étalonnage par le système décrit, procédé qui peut se scinder en trois étapes : calibration, prise de référence, caractérisation.

Cette dernière étape connue en elle-même dans le domaine de la robotique consiste à relever les imperfections des organes mécaniques du robot au cours des mouvements, au moyen d'instruments de mesure métro logique appropriés ( inclinomètres, comparateurs, lunettes, théodolithes...), en vue de définir les coefficients de correction pour compenser ces imperfections.

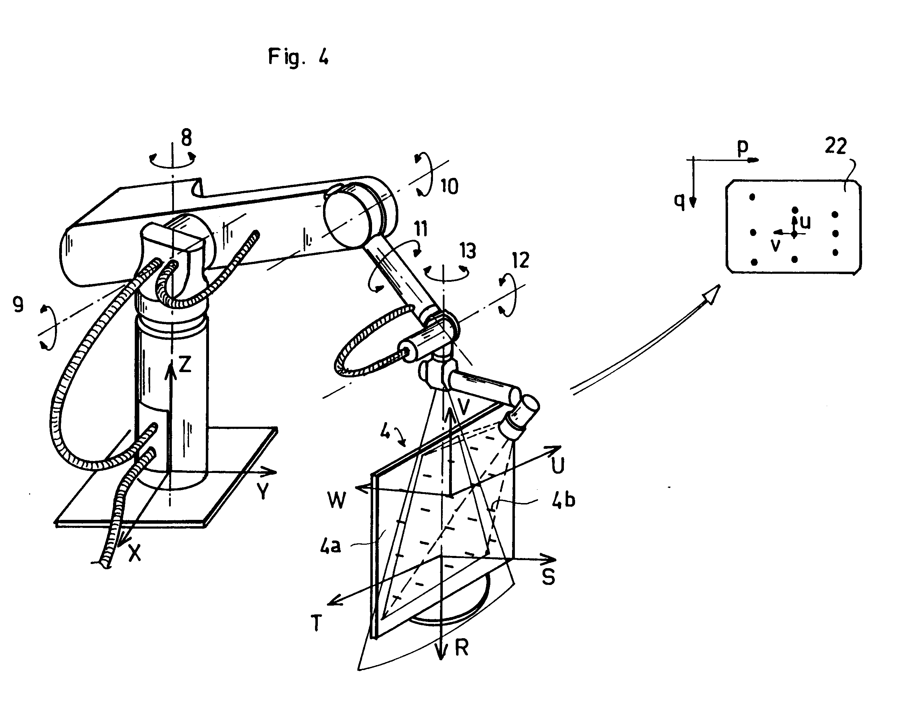

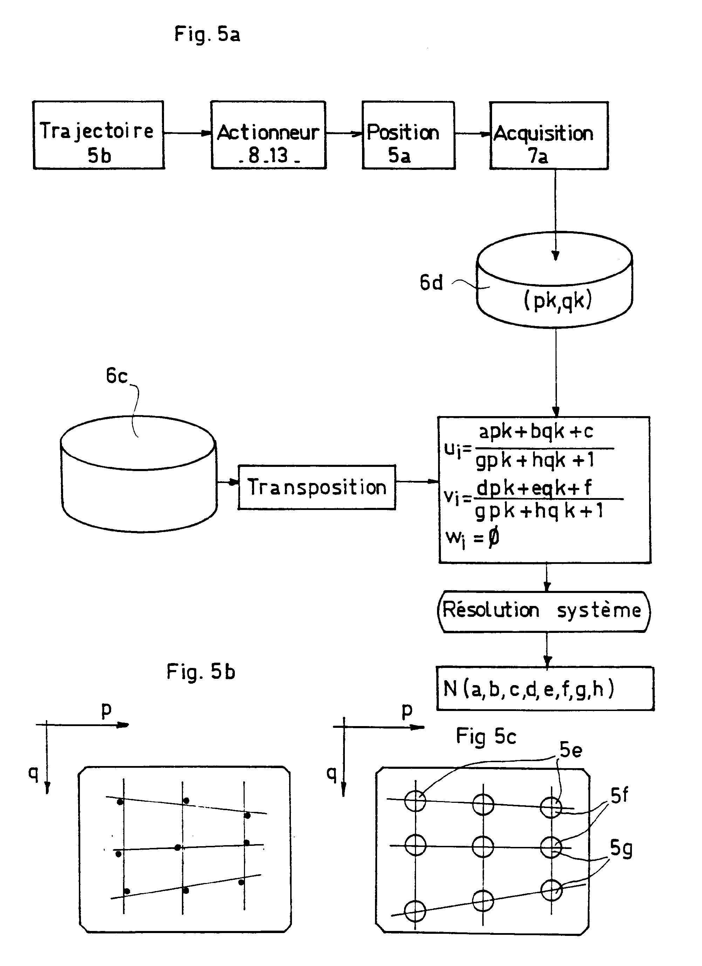

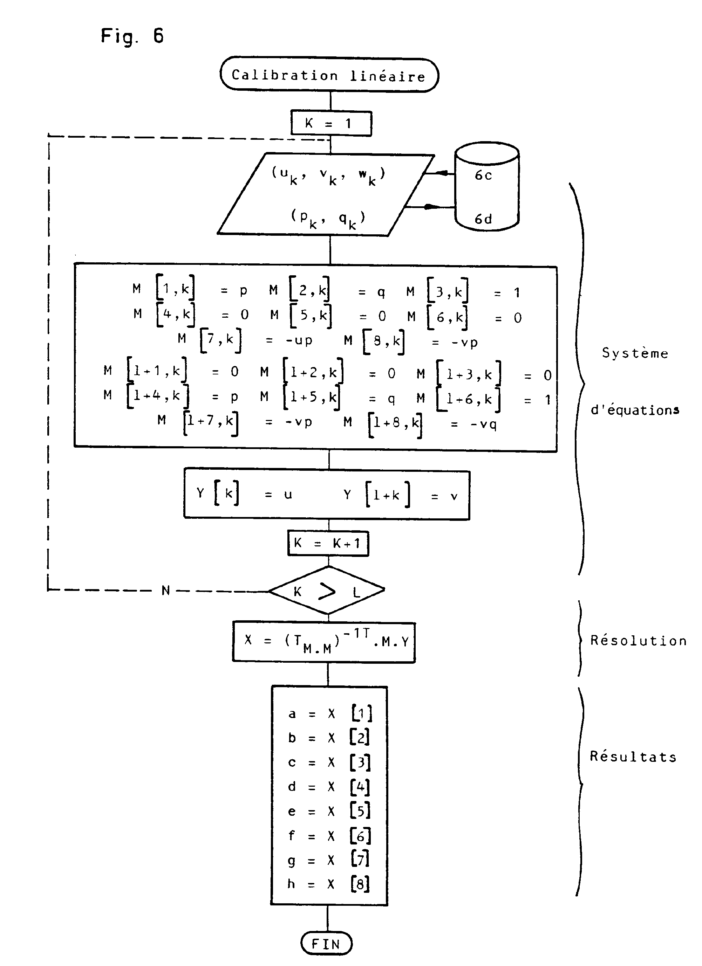

La figure 4 montre le système en cours de calibration dans une position dite de calibration, cependant que les figures 5a et 6 illustrent la chaîne logicielle et l'algorithme de calcul dans le cas de la calibration linéaire. Le faisceau lamellaire FL parallèle à la plaque 4a intercepte les piges 4b et la caméra réalise l'acquisition desdites piges et délivre des informations brutes (p, q) (lignes et colonnes des échos correspondants) qui sont supposées visualisées sur un moniteur 22 de contrôle caméra. Ces informations brutes sont mémorisées dans la zone-mémoire 6d.

Le référentiel capteur (U, V, W) ayant une position connue par rapport à la mire pour cette position de calibration, on transpose les informations de définition de la mire contenue dans la zone-mémoire 6c (pas du maillage entre piges) en coordonnées (u, v, w) de chaque pige dans le référentiel capteur (U, V, W). En pratique, l'on peut choisir un référentiel capteur qui passe par la pige centrale et dont deux axes sont parallèles aux alignements des piges et l'autre axe perpendiculaire. Cette transposition est effectuée par le calculateur 5 qui est programmé à cet effet.

7

Dans le cas de la mire de calibration virtuelle, le faisceau lamellaire FL intercepte la pige unique 4f et la caméra réalise l'acquisition de ladite pige et délivre les informations brutes (p, q) (lignes et colonnes de l'écho correspondant) qui sont supposées visualisées sur un moniteur de contrôle caméra. Ces informations brutes sont acquises pour différentes positions de l'ensemble-capteur par rapport à la pige unique comme schématisé à la figure 1b et sont mémorisées dans la zone-mémoire 6d. Le référentiel capteur (U, V, W) ayant des positions de calibration connues par rapport à la pige unique, l'on transpose les informations de définition de la mire virtuelle contenue dans la zone-mémoire 6c (pas du maillage virtuel entre piges virtuelles) en coordonnées (u, v, w) de chaque pige virtuelle dans le référentiel capteur (U, V, W).

Dans le cas décrit de la calibration linéaire, on choisit une forme de fonction de transfert intermédiaire :

$$
N \begin{cases} u = F(p,q) = \dfrac{ap + bq + c}{gp + hq + 1} \\[2ex] v = G(p,q) = \dfrac{dp + eq + f}{gp + hq + 1} \\[2ex] w = 0 \end{cases}
$$

les coefficients (a-h) étant déterminés en appliquant ces équations à au moins quatre points des reliefs de la mire, pour lesquels le quadruplet (u, v, p, q) est connu et mémorisé, et en résolvant le système linéaire d'équations obtenu qui est appliqué à $\ell$ piges (indice courant : k) et fournit le système d'équations linéaire suivant :

$$
1 \leqslant k \leqslant \ell \begin{cases} ap_k + bq_k + c + o + o + o - gu_kp_k - hu_kq_k = u_k \\[2ex] o + o + o + dp_k + eq_k + f - gv_kp_k - hv_kq_k = v_k \end{cases}
$$

qui peut s'écrire globalement sous forme matricielle :

$$MX = Y$$

où X est le vecteur inconnu a, b, c, d, f, g, h définissant la fonction de transfert intermédiaire N et où M est un tableau de dimension : 8 lignes par 2 $\ell$ colonnes.

La solution au moindre carré est donnée par :

$$X = (^TM.M)^{-1}.{}^TM.Y$$

Le logigramme de la figure 6 illustre la constitution du système d'équations et sa résolution.

Dans le cas de petites piges, la résolution se fait sur le barycentre de l'éclat lumineux constitué de 1, 2, 3 pixels. Le nombre de piges est alors choisi supérieur à 4 notamment $9 < \ell < 25$ de façon à fournir des redondances et à permettre de minimiser les erreurs de quantification sur $p_k$ et $q_k$ liées à la résolution de la caméra et à l'échantillonnage de l'acquisition.

La figure 5b est une visualisation de la fonction de transfert intermédiaire sous forme u = Cste et v = Cste dans l'espace (p, q).

Dans le cas de grosses piges, la résolution se fait à partir des centres des cercles recalculés passant au mieux par les arcs de cercles lumineux au sens des moindres carrés. Le nombre de piges est alors choisi supérieur à 4 (4 à 6) de façon à fournir une redondance permettant de vérifier la cohérence de la résolution. Les erreurs de quantification sur les $p_k$ et $q_k$ des centres des piges sont minimisés par la résolution aux moindres carrés des cercles passant au mieux par les arcs lumineux constitués de 20 à 30 points. Cette méthode des grosses piges donne de meilleurs résultats en précision que la méthode de nombreuses petites piges.

La figure 5c est une visualisation de la fonction de transfert intermédiaire sous forme u = Cste et v = Cste dans l'espace (p, q) avec les grosses piges.

Les éclats lumineux 5e sont les intersections du laser avec les grosses piges.

Les cercles 5f donnent ce maillage des piges reconstitués par calcul.

Les centres des cercles 5g sont alors des coordonnées $p_k$, $q_k$ en nombre réel dans l'espace (pq).

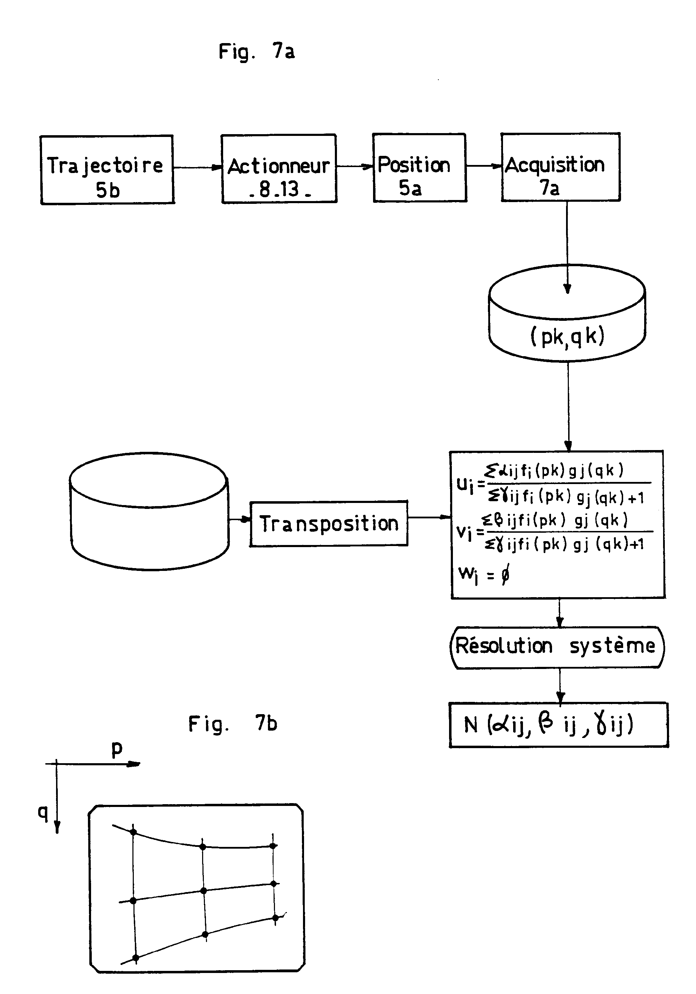

Les figures 7a, 8a et 9a illustrent la chaîne de calcul dans le cas de trois autres formes de fonction de transfert intermédiaires : non linéaire, définie par zones élémentaires, corrigée par table ; les figures 7b, 8b, 9b et 9c sont une visualisation de ces fonctions de transfert intermédiaires.

Dans le cas de la figure 7a d'un système non linéaire (aberration optique de la caméra, distorsion vidéo...), on considère que la formulation linéaire précédente est valable localement et que les coefficients a - h sont fonctions du point (p, q) ; la fonction de transfert intermédiaire est alors choisie de la forme :

$$
N \begin{cases}
u = F(p,q) = \dfrac{\displaystyle\sum_{ij=0}^{n} \alpha_{ij}\, f_i(p)\cdot g_j(q)}{1+\displaystyle\sum_{ij=1}^{n} \gamma_{ij}\, f_i(p)\cdot g_j(q)} \\[3em]
v = G(p,q) = \dfrac{\displaystyle\sum_{ij=0}^{n} \beta_{ij}\, f_i(p)\cdot g_j(q)}{1+\displaystyle\sum_{ij=1}^{n} \gamma_{ij}\, f_i(p)\cdot g_j(q)} \\[3em]
w = 0
\end{cases}
$$

les fonctions $f_i$, $g_j$ étant une base de développement limité, les coefficients ($\alpha_{ij}$, $\beta_{ij}$, $\gamma_{ij}$) étant déterminés en appliquant ces équations à un nombre de points de reliefs de la mire, au moins égal à $1 + \dfrac{3n(n+3)}{4}$, pour lesquels le quadruplet (u, v, p, q) est connu et mémorisé, et en résolvant le système linéaire d'équations obtenu.

Les non-linéarités des coefficients représentent de faibles variations (quelques pourcent) de la fonction de transfert et ces coefficients peuvent donc être exprimés sour la forme de développement limite.

Les bases de développement $f_i$, $g_j$ peuvent être polynomiales

$$f_i(p_k) = p^i_k$$
$$g_j(g_k) = q^j_k$$

Elles peuvent également être exponentielles :

$$f_i(p_k) = e^{i.p_k}$$
$$g_j(g_k) = e^{j.p_k}$$

En substituant ces développements dans les fonctions F, G et en factorisant par rapport aux coefficients $\alpha_{ij}$, $\beta_{ij}$, $\gamma_{ij}$, on obtient un système d'équations linéaires en $\alpha_{ij}$, $\beta_{ij}$, $\gamma_{ij}$ ayant un nombre d'inconnues fonction du degré n du développement.

Ce système peut également être résolu aux moindres carrés en choisissant un nombre de piges redondant.

La figure 7b illustre la fonction de transfert intermédiaire ainsi définie, qui correspond à des courbes non rectilignes u = Cste, v = Cst dans l'espace p, q, apte à épouser au plus près le maillage des piges malgré la non-linéarité du système.

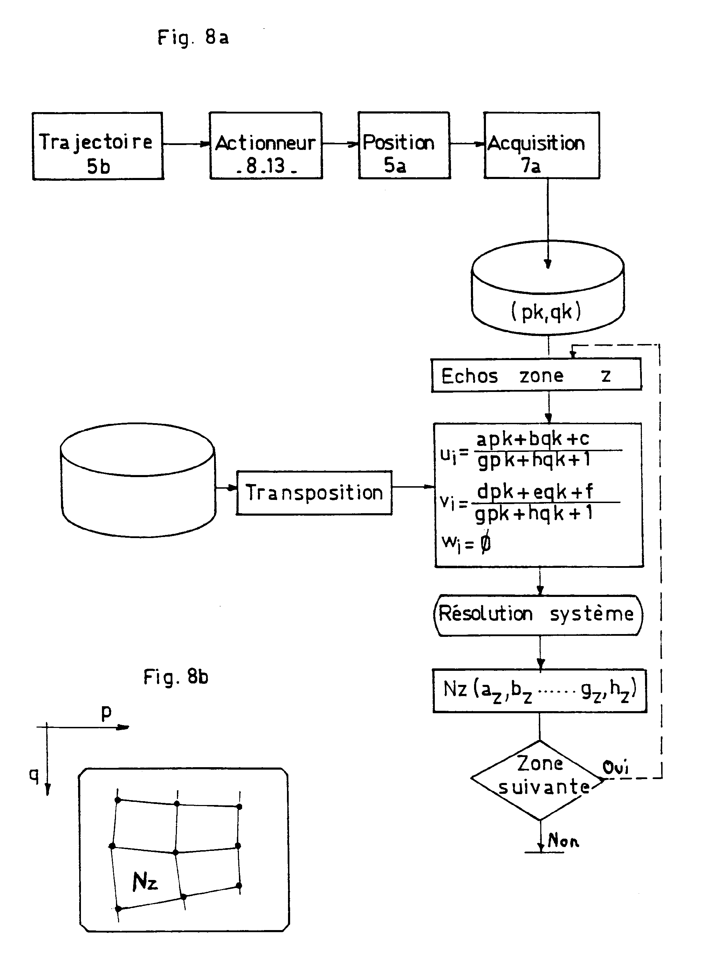

La figure 8a illustre une autre chaîne de calcul dans laquelle on calcule la fonction de transfert intermédiaire N, en divisant la mire de calibration en n zones élémentaires et en calculant pour chaque zone élémentaire (e) une fonction de transfert élémentaire $N_e$, la fonction de transfert intermédiaire N étant constituée pour l'ensemble de ces fonctions élémentaires appliquées sur leurs zones élémentaires respectives. La chaîne est analogue à celle du calcul de calibration prédéfini, mais avec une boucle de calcul pour chaque zone. Cette procédure est utilisable pour de faibles non-linéarités permettant de définir un nombre modéré de zones pratiquement linéaires (par exemple 16 zones).

La figure 8b montre le raccordement des fonctions de transfert pour les diverses zones sous la forme u = Cste, v = Cste dans l'espace (p, q).

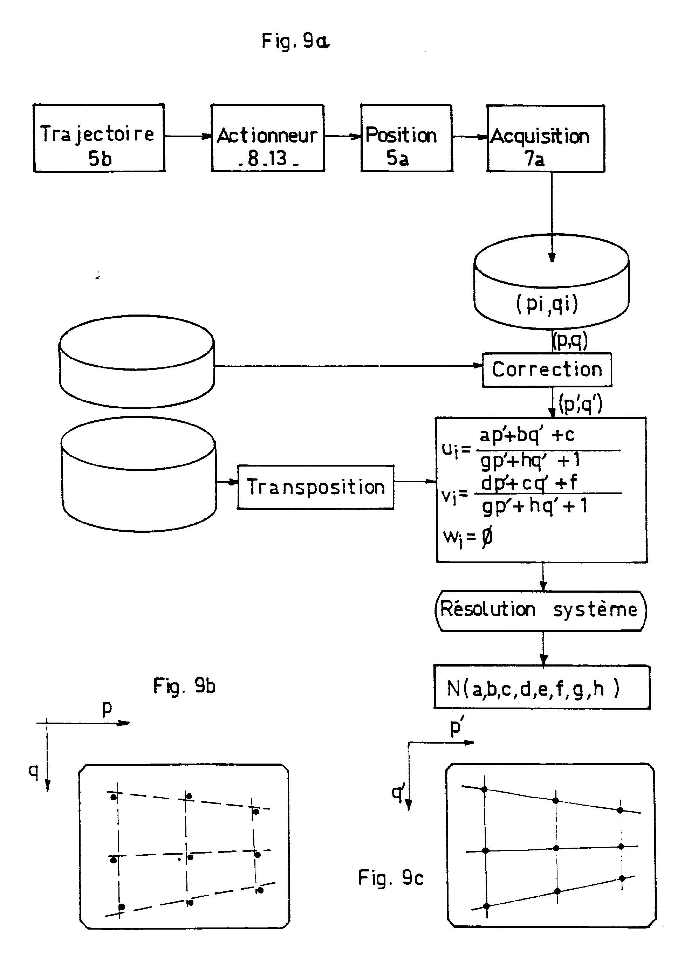

La figure 9a illustre une autre chaîne de calcul dans laquelle on calcule la fonction de transfert intermédiaire N :

. en mémorisant préalablement une table de linéarisation p'(p,q), q'(p,q) caractérisant les distorsions du système d'acquisition,

. en corrigeant préalablement les informations brutes (p, q) au moyen de ladite table de linéarisation, en vue d'obtenir des informations corrigées p', q',

. en calculant la fonction de transfert N sous la forme linéaire, conformément à la revendication 4 :

$$N \begin{cases} u = F(p,q) = \dfrac{ap' + bq' + c}{gp' + hq' + 1} \\[2ex] v = G(p,q) = \dfrac{dp' + eq' + f}{gp' + hq' + 1} \\[2ex] w = 0 \end{cases}$$

La table de linéarisation est établie par mesure directe des distorsions du système : distorsion optique, électronique et contient des coefficients rectificatifs à appliquer aux informations brutes p, q pour obtenir les informations corrigées p', q'. Le système d'équations est ensuite établi et résolu comme dans le cas linéaire.

La figure 9b illustre la fonction de transfert intermédiaire linéaire sans appliquer la rectification et la figure 9c illustre cette fonction corrigée (sous la forme u = Cst, v = Cste dans l'espace (p', q').

Le procédé d'étalonnage consiste ensuite à définir la matrice ($M_{TC}$) de passage du référentiel capteur au référentiel terminal afin de la composer à la fonction de transfert intermédiaire N, calculée comme ci-dessus défini.

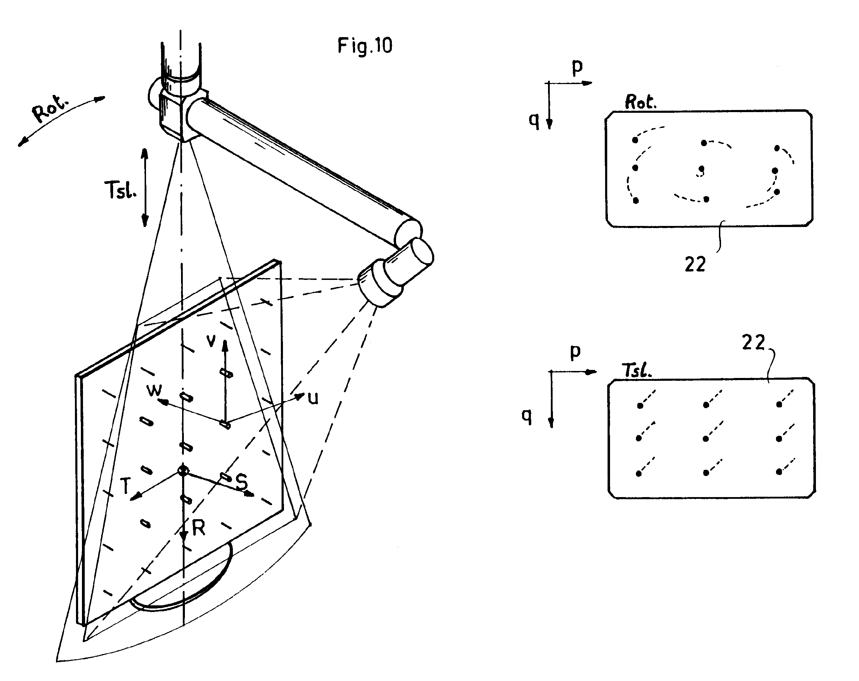

Cette définition de $M_{TC}$ est obtenue par l'étape de prise de référence qui est illustrée à la figure 10, avec les images correspondantes apparaissant sur le moniteur de contrôle 22 ; cette étape de prise de référence consiste :

. à réaliser l'acquisition d'au moins un point caractéristique d'une mire de référence dans -$\ell$- positions de l'ensemble-capteur, en vue d'acquérir les informations brutes ($p_l$, $q_l$..., $p_k$, $q_k$... $p_l$, $q_l$) représentatives des échos correspondants,

. à calculer au moyen de la fonction de transfert intermédiaire (N) les coordonnées correspondantes ($u_l$, $v_l$, $w_l$,... $u_k$, $v_k$, $w_k$... $u_l$, $v_l$, $w_l$) dans le référentiel-capteur,

. à mémoriser les matrices ($M_{ATl}$..., $M_{ATk}$..., $M_{ATl}$) délivrées pour chacune des positions d'acquisition par les moyens de détermination,

. à résoudre le système d'équations suivants en vue de calculer l'inconnu $M_{TC}$ :

$$\begin{vmatrix} x_0 \\ y_0 \\ z_0 \end{vmatrix} = \begin{bmatrix} M_{ATk} \end{bmatrix} \cdot M_{TC} \begin{vmatrix} u_k \\ v_k \\ w_k \end{vmatrix} \qquad 1 \leqslant k \leqslant \ell$$

où

$$\begin{vmatrix} x_0 \\ y_0 \\ z_0 \end{vmatrix}$$

sont les coordonnées inconnues du point caractéristique de la mire, éliminées par substitution dans la résolution du système d'équations.

Comme déjà indiqué, un calcul redondant pourra être obtenu en prenant :
- 9 piges de la mire comme points caractéristiques de référence dans le cas de petites piges,
- 3 centres de piges comme points caractéristiques de référence dans le cas de grosses piges.

Selon un mode de mise en oeuvre préféré, les -$\ell$- positions de l'ensemble-capteur sont engendrées d'une part, par une rotation en pas à pas de l'organe terminal autour de l'origine du référentiel terminal (R, S, T), d'autre part, par une translation en pas à pas parallèle à un axe connu lié audit référentiel terminal (R, S, T), de sorte que la matrice $M_{TC}$ soit constituée par la position de l'origine du référentiel terminal dans le référentiel capteur (U, V, W) et par l'orientation dudit référentiel terminal dans le référentiel capteur, la résolution du système d'équations précité étant effectué en le scindant en deux sous-systèmes indépendants, l'un utilisant 'les points fournis par la rotation et donnant la position de l'origine précitée, l'autre utilisant les points fournis par la translation et donnant l'orientation du référentiel terminal (R, S, T).

Lors de la rotation, les piges décrivent dans le référentiel capteur (U, V, W) des arcs de cercle centrés sur l'origine du référentiel terminal (coordonnée $u_o$, $v_o$, $w_o$) qui est ainsi calculé en recherchant le centre au sens des moindres carrés de ces arcs de cercle.

Lors de la translation, les piges décrivent dans le référentiel capteur (U, V, W) des segments de droite parallèles à la direction du déplacement du référentiel terminal (R, S, T) dont l'orientation est ainsi calculée au sens des moindres carrés dans le référentiel capteur, sous forme des cosinus directeurs ($R_u$, $R_v$, $R_w$ ; $S_u$, $S_v$, $S_w$ ; $T_u$, $T_v$, $T_w$) des vecteurs R, S, T.

La matrice $M_{TC}$ s'exprime alors sous la forme homogène suivante :

$$M_{TC} = \begin{vmatrix} 1 & 0 & 0 & 0 \\ u_o & R_u & S_u & T_u \\ v_o & R_v & S_v & T_v \\ w_o & R_w & S_w & T_w \end{vmatrix}$$

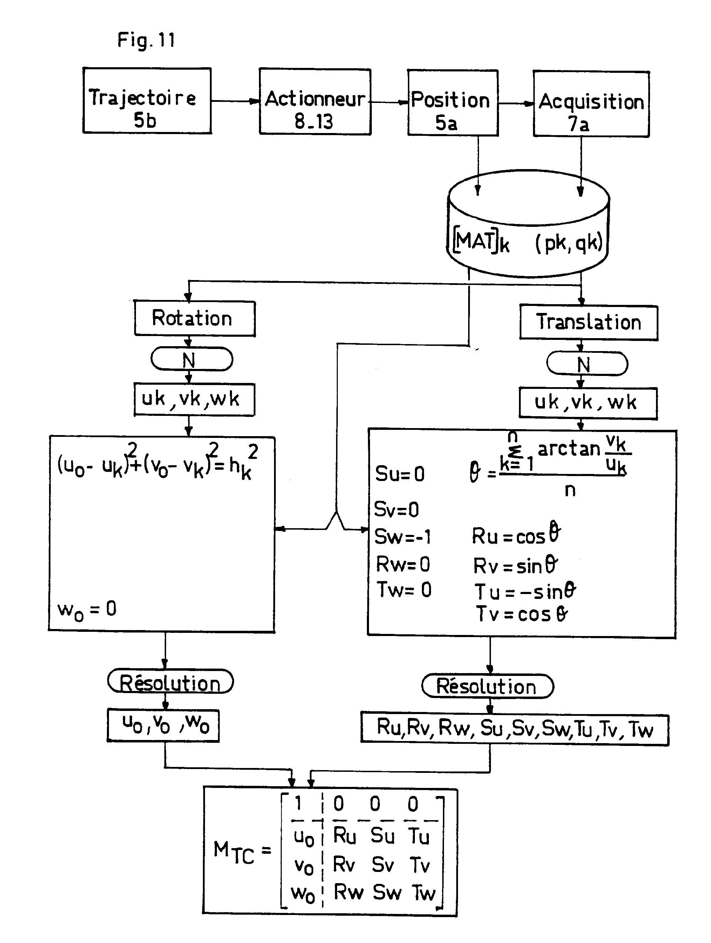

La chaîne de calcul de cette matrice $M_{TC}$ est illustrée à la figure 11.

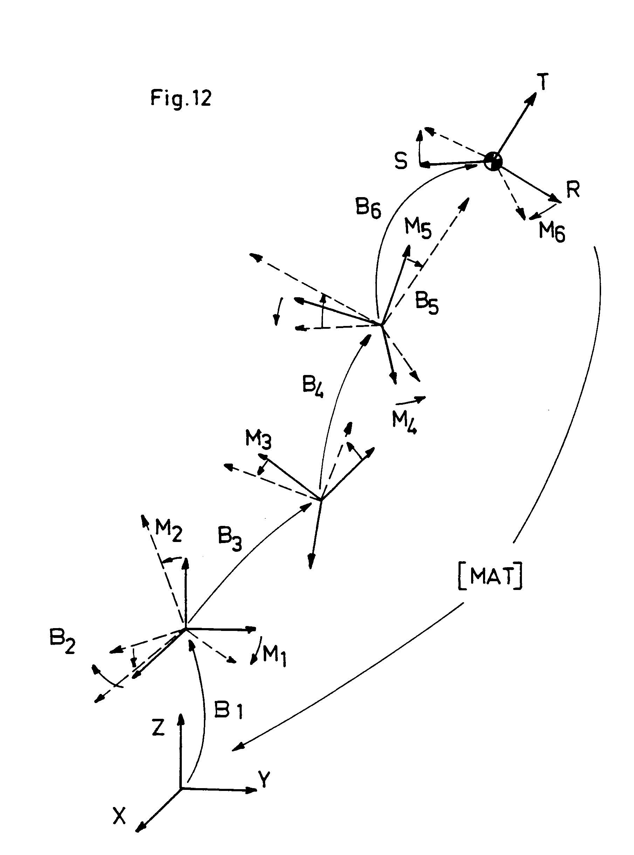

Par ailleurs, la matrice $M_{AT}$ de passage du référentiel terminal (R, S, T) au référentiel absolu (X, Y, Z) est calculée par le module 5a du calculateur à partir des informations de position fournies par l'interface 7c et des informations de définition de la chaîne cinématique issues de la zone-mémoire 6a. Ce calcul classique en soi en robotique est illustré à la figure 12. Si l'on considère que le (n+l)$^{\text{ième}}$ moteur est attaché au n$^{\text{ième}}$ moteur, le passage du référentiel n + l (supposé attaché au n + l$^{\text{ème}}$ moteur) au référentiel n est exprimé par la matrice $M_{n, n+1} = [B_{n, n+1}] [M_{OT\ n+1}]$

$B_{n, n+1}$ est une matrice constante de construction du robot, définie à partir des informations de définition de la chaîne cinématique, issues de la zone-mémoire 6a.

$M_{OT\ n + l}$ est une matrice variable dépendant de la position de n+l moteur par rapport à une position initiale de son capteur 18 et définie par les informations de positions issues de l'interface 7c.

Comme l'illustre la figure 12, dans le cas de six moteurs, on a :
$M_{AT} = M_{0,1}.M_{1,2}.M_{2,3}.M_{3,4}.M_{4,5}.M_{5,6}$ la matrice $M_{0,1}$ étant la matrice de passage du premier moteur 8 au référentiel bâti (X, Y, Z), cependant que la matrice $M_{5,6}$ est la matrice de passage du référentiel terminal (R, S, T) au moteur 5.

## Revendications

1. Procédé d'étalonnage d'un système d'acquisition de forme, apte à délivrer les coordonnées (x, y, z) représentatives de la forme d'un objet tridimensionnel dans un référentiel dit absolu (X, Y, Z), ledit système d'acquisition comprenant un bâti fixe auquel est lié le référentiel absolu, un organe terminal mobile auquel est lié un référentiel dit terminal (R, S, T), un jeu d'actionneurs adapté pour mouvoir l'organe terminal par rapport au bâti fixe, des moyens (18, 7c, 6a, 6b, 5a) de détermination de la position et de l'orientation du terminal par rapport au bâti fixe apte à mémoriser une matrice $M_{AT}$ de passage du référentiel terminal (R, S, T) au référentiel absolu (X, Y, Z), un ensemble-capteur porté par l'organe terminal et adapté pour émettre vers l'objet tridimensionnel un faisceau de forme connue et pour capter l'écho renvoyé par ledit objet, et des moyens de stockage des informations issues de l'ensemble-capteur dites informations brutes représentatives des échos captés, ledit procédé d'étalonnage permettant de définir la fonction de transfert globable L entre tout écho renvoyé et les coordonnées absolues correspondantes (x, y, z) dans le référentiel absolu appelées à être délivrées par le système d'acquisition, et étant caractérisé en ce qu'il consiste :

. à mémoriser préalablement des informations de définition géométrique, relatives à une mire de calibration présentant un ou des reliefs de géométrie et dimensions connues,

. à réaliser l'acquisition de la forme de ladite mire de calibration au moyen de l'ensemble-capteur disposé dans au moins une position déterminée par rapport à ladite mire, dite position(s) de calibration, en vue de mémoriser les informations brutes (p, q...) correspondantes représentatives des échos de la mire captés par ledit ensemble-capteur,

. à transposer, pour chaque position de calibration précitée, les informations de définition de la mire de calibration sous la forme de coordonnées (u, v, w) dans un référentiel lié au capteur dit référentiel capteur (U, V, W),

. à calculer, à partir des résultats de l'acquisition précitée et des coordonnées (u, v, w) caractéristiques de la mire dans le référentiel capteur, une fonction de transfert intermédiaire :

$$N \quad \begin{cases} u = F(p, q...) \\ v = G(p, q...) \\ w = H(p, q...) \end{cases}$$

donnant les coordonnées (u, v, w) dans le référentiel capteur (U, V, W) en fonction des informations brutes (p, q),

. à définir la position du référentiel capteur (U, V, W) dans le référentiel terminal (R, S, T) et à mémoriser une matrice $M_{TC}$ de passage du référentiel capteur au référentiel terminal,

. à composer la fonction de transfert intermédiaire N avec, d'une part, la matrice de passage $M_{TC}$, d'autre part, la matrice de passage $M_{AT}$, et à obtenir la fonction de transfert olobale $L = M_{AT}.M_{TC}.N$

2. Procédé d'étalonnage selon la revendication 1, caractérisé en ce que l'on utilise une mire de calibration comprenant une plaque portant sur une face un maillage de piges, et l'on mémorise comme informations de définition des coordonnées $(u_k, v_k)$ attachées à chaque pige de la mire dans un référentiel (U, V) contenu dans le plan de la face de la mire portant le maillage de piges.

3. Procédé d'étalonnage selon la revendication 1, caractérisé en ce que l'on utilise une mire de calibration virtuelle, élaborée à partir d'une pige unique, en disposant l'ensemble-capteur dans plusieurs positions de calibration connues, en mémorisant comme informations de définition, des coordonnées $(u_k, v_k)$ attachée à la pige unique pour les différentes positions de calibration dans un référentiel (U, V) lié à l'ensemble-capteur, en mémorisant les informations brutes (p, q..,) représentatives des échos de la pige unique captés par l'ensemble-capteur dans ses différentes positions de calibration et en composant ces informations brutes en vue de constituer un maillage virtuel représentant la mire de calibration virtuelle.

4. Procédé selon l'une des revendications 1, 2 ou 3, pour l'étalonnage d'un système d'acquisition, dans lequel l'ensemble-capteur comprend un système d'éclairage apte à émettre au moins un faisceau lumineux lamellaire vers l'objet et un dispositif vidéo apte à filmer l'objet avec une parallaxe constante par rapport aux faisceaux du système d'éclairage en vue de délivrer des informations brutes (p, q) fonction des colonnes (p) et lignes (q) des images des points de la trace de chaque faisceau sur l'objet ou la mire de calibration.

5. Procédé d'étalonnage selon la revendication 4, caractérisé en ce que l'on calcule une fonction de transfert intermédiaire N de la forme linéaire suivante :

$$N \begin{cases} u = F(p,q) = \dfrac{ap + bq + c}{gp + hq + 1} \\\\ v = G(p,q) = \dfrac{dp + eq + f}{gp + hq + 1} \\\\ w = 0 \end{cases}$$

les coefficients (a-h) étant déterminés en appliquant ces équations à au moins quatre points des reliefs de la mire, pour lesquels le quadruplet (u, v, p, q) est connu et memorisé, et en résolvant le système linéaire d'équations obtenu.

**6.** Procédé d'etalonnage selon la revendication 4, caractérisé en ce que l'on calcule une fonction de transfert intermédiaire N non linéaire de la forme :

$$N \begin{cases} u = F(p,q) = \dfrac{\displaystyle\sum_{ij=0}^{n} \alpha_{ij}\, f_i(p) \cdot g_j(q)}{1 + \displaystyle\sum_{ij=1}^{n} \gamma_{ij}\, f_i(p) \cdot g_j(q)} \\\\ v = G(p,q) = \dfrac{\displaystyle\sum_{ij=0}^{n} \beta_{ij}\, f_i(p) \cdot g_j(q)}{1 + \displaystyle\sum_{ij=1}^{n} \gamma_{ij}\, f_i(p) \cdot g_j(q)} \\\\ w = 0 \end{cases}$$

les fonctions $f_i$, $g_j$ étant une base de développement limité, les coefficients $\alpha_{ij}$, $\beta_{ij}$, $\gamma_{ij}$ étant déterminés en appliquant ces équations à un nombre de points de reliefs de la mire, au moins égal à $1 + \dfrac{3n(n+3)}{4}$, pour lesquels le quadruplet (u, v, p, q) est connu et mémorisé, et en résolvant le système linéaire d'équations obtenu.

**7.** Procédé d'étalonnage selon la revendication 4, caractérisé en ce que l'on calcule la fonction de transfert intermédiaire N, en divisant la mire de calibration en n zones élémentaires et en calculant pour chaque zone élémentaire (e) une fonction de transfert élémentaire $N_e$ conformément à l'une des revendications 5 ou 6, la fonction de transfert intermédiaire N étant constituée pour l'ensemble de ces fonctions élémentaires appliquées sur leurs zones élémentaires respectives.

**8.** Procédé d'étalonnage selon la revendication 4, caractérisé en ce que l'on calcule la fonction de transfert intermédiaire N :

. en mémorisant préalablement une table de linéarisation p'(p,q), q'(p,q) caractérisant les distorsions du système d'acquisition,

. en corrigeant préalablement les informations brutes (p, q) au moyen de ladite table de linéarisation, en vue d'obtenir des informations corrigées p', q',

. en calculant la fonction de transfert N sous la forme linéaire, conformément à la revendication 4 :

$$
N \left\{ \begin{array}{l}
u = F(p,q) = \dfrac{ap' + bq' + c}{gp' + hq' + 1} \\[2em]
v = G(p,q) = \dfrac{dp' + eq' + f}{gp' + hq' + 1} \\[2em]
w = 0
\end{array} \right.
$$

9. Procédé d'étalonnage selon l'une des revendications 1 à 8, caractérisé en ce que la matrice $M_{TC}$ de passage du référentiel capteur (U, V, W) au référentiel terminal est définie :

. en fixant la mire de calibration sur le bâti fixe dans une position prédéterminée connue et en mémorisant les données correspondantes,

. en définissant et mémorisant, à partir de ces données, une matrice $M_{AC}$ de passage du référentiel capteur (U, V, W) au référentiel absolu (X, Y, Z) pour la position de calibration,

. en mémorisant la matrice $M_{AT}$ délivrée par les moyens de détermination dans la position de calibration, matrice notée $M_{ATO}$

. et en calculant la matrice $M_{TC}$ à partir des matrices précitées : $M_{TC} = (M_{ATO})^{-1}.M_{AC}$

10. Procédé d'étalonnage selon l'une des revendications 1 à 8, caractérisé en ce que la matrice $M_{TC}$ de passage du référentiel capteur (U, V, W) au référentiel terminal (R, S, T) est définie :

. en réalisant l'acquisition d'au moins un point caractéristique d'une mire de référence dans -$\ell$- positions de l'ensemble-capteur, en vue d'acquérir les informations brutes $(p_l, q_l..., p_k, q_k... p_l, q_l)$ représentatives des échos correspondants,

. en calculant au moyen de la fonction de transfert intermédiaire N les coordonnées correspondantes $(u_l, v_l, w_l... u_k, v_k, w_k... u_l, v_l, w_l)$ dans le référentiel-capteur,

. en mémorisant les matrices $M_{ATl}..., M_{ATk}..., M_{ATl}$ délivrées pour chacune des positions d'acquisition par les moyens de détermination,

. en résolvant le système d'équations suivant en vue de calculer l'inconnue $M_{TC}$ :

$$
\begin{vmatrix} x_o \\ y_o \\ z_o \end{vmatrix} = \begin{bmatrix} M_{ATk} \end{bmatrix} \cdot M_{TC} \begin{vmatrix} u_k \\ v_k \\ w_k \end{vmatrix} \qquad 1 \leqslant k \leqslant \ell
$$

où

$$
\begin{vmatrix} x_o \\ y_o \\ z_o \end{vmatrix}
$$

sont les coordonnées inconnues du point caractéristique de la mire, éliminées par substitution dans la résolution du système d'équations.

11. Procédé d'étalonnage selon la revendication 10, caractérisé en ce que les 1 positions de l'ensemble-capteur sont engendrées, d'une part, par une rotation en pas à pas de l'organe terminal autour de l'origine du référentiel terminal (R, S, T), d'autre part, par une translation en pas à pas parallèle à un axe connu lié audit référentiel terminal (R, S, T), de sorte que la matrice $M_{TC}$ soit constituée par la position de l'origine du référentiel terminal dans le référentiel capteur (U, V, W) et par l'orientation dudit référentiel terminal dans le référentiel capteur, la résolution du système d'équations précité étant effectué en le scindant en deux sous-systèmes indépendants, l'un utilisant les points fournis par la rotation et donnant la position de l'origine précitée, l'autre utilisant les points fournis par la translation et donnant l'orientation du référentiel terminal (R, S, T).

12. Procédé d'étalonnage selon les revendications 1 à 10, caractérisé en ce que le calcul de la fonction de transfert intermédiaire N et le calcul de la matrice $M_{TC}$ de passage du référentiel capteur au référentiel terminal s'effectuent chacune en établissant un système d'équations redondant et en le résolvant au sens des moindres carrés.

13. Système d'acquisition de forme apte à délivrer les coordonnées (x, y, z) représentatives de la forme d'un objet tridimensionnel dans un référentiel dit absolu (X, Y, Z), ledit système comprenant un bâti fixe auquel est lié le référentiel absolu, un organe terminal mobile auquel est lié un référentiel dit terminal (R, S, T), un jeu d'actionneurs adapté pour mouvoir l'organe terminal par rapport au bâti fixe, des moyens (18, 7c, 6a, 6b, 5a) de détermination de la position et de l'orientation du terminal par rapport au bâti fixe apte à mémoriser une matrice $M_{AT}$ de passage du référentiel terminal (R, S, T) au référentiel absolu (X, Y, Z), un ensemble-capteur porté par l'organe terminal et adapté pour émettre vers l'objet tridimensionnel une onde structurée et pour capter l'écho renvoyé par ledit objet, et des moyens de stockage des informations issues de l'ensemble-capteur dites informations brutes représentatives des échos captés, ledit système étant caractérisé en ce qu'il comprend des moyens d'étalonnage en vue de la mise en oeuvre du procédé conforme à l'une des revendications 1 à 12, comportant :
    - une mire de calibration présentant un ou des reliefs de géométrie et dimensions connues,
    - des moyens de fixation de la mire de calibration sur le bâti,
    - des moyens de mémorisation comprenant une zone-mémoire pour les informations de définition géométrique relatives à la mire de calibration et une zone-mémoire pour la matrice $M_{TC}$ de passage du référentiel capteur au référentiel terminal,
    - et un calculateur adapté et programmé pour réaliser la transposition en coordonnées des informations de définition géométrique, pour calculer la fonction de transfert intermédiaire N , et pour calculer par composition la fonction de transfert globale L selon le procédé conforme à l'une des revendications 1 à 12.

14. Système d'acquisition selon la revendication 13, caractérisé en ce que la mire de calibration comprend une plaque dotée d'un maillage de piges.

15. Système d'acquisition selon la revendication 13, caractérisé en ce que la mire de calibration comprend une pige unique.

16. Système d'acquisition selon l'une des revendications 13, 14 ou 15, apte à réaliser un étalonnage conforme à la revendication 9, caractérisé en ce que :
    . les moyens de fixation de la mire de calibration sont adaptés pour assurer la fixation de ladite mire dans une position prédéterminée connue par rapport au bâti,
    . les moyens de mémorisation comprennent une zone-mémoire pour les données de position correspondantes de ladite mire, et une zone-mémoire pour la matrice $M_{AC}$ de passage du référentiel capteur au référentiel absolu,
    . le calculateur est adapté et programmé pour définir la matrice $M_{AC}$ et pour calculer la matrice $M_{TC}$ à partir des matrices $M_{AC}$ et $M_{ATO}$.

17. Système d'acquisition selon l'une des revendications 13, 14, 15 ou 16, apte à réaliser un étalonnage conforme à la revendication 10, caractérisé en ce que :
    . ledit système comprend une mire de référence présentant au moins un point caractéristique et des moyens de fixation de la mire de référence sur le bâti,
    . les moyens de mémorisation comprennent une zone-mémoire pour les matrices $M_{ATI}$... $M_{ATI}$,
    . le calculateur est adapté et programmé pour résoudre le système d'équations en $M_{TC}$.

18. Système d'acquisition selon la revendication 17, caractérisé en ce que le calculateur est programmé par un logiciel de résolution du système d'équations en $M_{TC}$, dans lequel on calcule la fonction de transfert intermédiaire N en divisant la mire de calibration en n zones élémentaires et en calculant pour chaque zone élémentaire (e) une fonction de transfert élémentaire $N_e$, chaque fonction de transfert intermédiaire ayant la forme linéaire suivante :

$$u_i = \frac{apk + bqk + c}{gpk + hqk + 1}$$

$$v_i = \frac{dpk + eqk + f}{gpk + hqk + 1}$$

$$w_i = \emptyset$$

la fonction de transfert intermédiaire N étant constituée pour l'ensemble de ces fonctions élémentaires appliquées sur leurs zones élémentaires respectives.

19. Système d'acquisition selon l'une des revendications 13, 14, 15, 16, 17 ou 18, dans lequel l'ensemble-capteur comprend un système d'éclairage apte à émettre au moins un faiscau lumineux lamellaire vers l'objet et un dispositif vidéo apte à filmer l'objet avec une parallaxe constante par rapport aux faisceaux du système d'éclairage en vue de délivrer des informations brutes (p, q) fonction des colonnes (p) et lignes (q) des images des points de la trace de chaque faisceau sur l'objet ou la mire de calibration.

20. Système d'acquisition selon la revendication 19, caractérisé en ce que le calculateur est programmé par un logiciel de calcul de la fonction de transfert intermédiaire,

$$
u = F(p,q) = \frac{\displaystyle\sum_{ij=0}^{n} \alpha_{ij}\, f_i(p)\cdot g_j(q)}{1 + \displaystyle\sum_{ij=1}^{n} \gamma_{ij}\, f_i(p)\cdot g_j(q)}
$$

$$
v = G(p,q) = \frac{\displaystyle\sum_{ij=0}^{n} \beta_{ij}\, f_i(p)\cdot g_j(q)}{1 + \displaystyle\sum_{ij=1}^{n} \gamma_{ij}\, f_i(p)\cdot g_j(q)}
$$

$$w = 0$$

les fonctions $f_i$, $g_j$ étant une base de développement limité, les coefficients $\alpha_{ij}$, $\beta_{ij}$, $\gamma_{ij}$ étant déterminés en appliquant ces équations à un nombre de points de reliefs de la mire, au moins égal à $1 + \dfrac{3n(n+3)}{4}$, pour lesquels le quadruplet (u, v, p, q) est connu et mémorisé, et en résolvant le système linéaire d'équations obtenu.

**21.** Système d'acquisition selon l'une des revendications 13 à 20, dans lequel :

. le jeu d'actionneurs est constitué par une chaîne cinematique de moteurs, l'un solidaire du bâti et un autre portant l'organe terminal,

. les moyens de détermination de la position et de l'orientation du terminal par rapport au bâti fixe comprennent des capteurs de position angulaire associés à chaque moteur, des moyens de comptage des signaux issus des capteurs, un module de calcul programmé pour engendrer la matrice $M_{AT}$ à partir des informations issues des moyens de mémorisation précités et desdits moyens de comptage, et une mémoire de stockage de ladite matrice $M_{AT}$.

## Claims

**1.** A calibration process for a shape acquisition system, capable of delivering co-ordinates (x, y, z) representing the shape of a three-dimensional object in a reference frame (X, Y, Z) referred to as absolute, the said acquisition system comprising a fixed framework to which the absolute reference frame is linked, a mobile terminal body to which a reference frame (R, S, T), referred to as terminal, is linked, a set of actuators adapted to displace the terminal body in relation to the fixed framework, means (18, 7c, 6a, 6b, 5a), for determining the position and orientation of the terminal in relation to the fixed framework, capable of memorising a matrix $M_{AT}$ of transfer from the terminal reference frame (R, S, T) to the absolute reference frame (X, Y, Z), a sensor group carried by the terminal body and adapted to emit a beam of known shape towards the three-dimensional object and to capture the echo returned by the said object, and means for storing the data issued by the sensor group and referred to as raw data representative of the captured echoes, the said calibration process allowing definition of the global transfer function L, between any returned echo and the corresponding absolute co-ordinates (x, y, z) which are in the absolute reference frame and intended for delivery by the acquisition system, **characterised in that** it consists of:

- firstly memorising the geometrical definition information relative to a calibration sight plate having one or more geometrical reliefs and being of known dimensions;
- carrying out the acquisition of shape of the said calibration sight plate by means of the sensor group arranged in at least one position determined in relation to the said sight plate, referred to as calibration position(s), with the aim of memorising the corresponding raw data (p, q...) representing the echoes from the sight plate captured by the said sensor group;
- for each above-mentioned calibration position, transposing the definition information from the calibration sight plate in the form of co-ordinates (u, v, w) to a reference frame linked to the sensor and referred to as the sensor reference frame (U, V, W);
- calculating, on the basis of the results of the aforementioned acquisition and the characteristic co-ordinates (u, v, w) of the sight plate in the sensor reference frame, an intermediate transfer function:

$$N \quad \begin{cases} u = F\,(p,\,q...) \\ v = G\,(p,\,q...) \\ w = H\,(p,\,q...) \end{cases}$$

giving the co-ordinates (u, v, w) in the sensor reference frame (U, V, W) according to the raw data (p, q);

- defining the position of the sensor reference frame (U, V, W) in the terminal reference frame (R, S, T) and memorising a matrix $M_{TC}$ of transfer from the sensor reference frame to the terminal reference frame;
- compiling the intermediate transfer function N using, on the one hand, the matrix of transfer $M_{TC}$, and, on the other hand, the matrix of transfer $M_{AT}$, and obtaining the global transfer function $L = M_{AT} . M_{TC} . N$;

**2.** A calibration process in accordance with claim 1, **characterised in that** a calibration sight plate is used comprising a plate having a grid configuration of measuring rods on one surface, and the co-ordinates $(u_k, v_k)$ associated with each measuring rod of the sight plate are memorised as definition information in a reference frame (U, V) contained in the plane of the sight plate surface having the grid configuration of measuring rods.

3. A calibration process in accordance with claim 1, **characterised in that** a virtual calibration sight plate is used, developed on the basis of a single measuring rod by positioning the sensor group in a plurality of known calibration positions, by memorising co-ordinates $(u_k, v_k)$, associated with the single rod, for the different calibration positions, as definition information in a reference frame (U, V) linked to the sensor group, by memorising the raw data (p, q...) representing the echoes from the single rod captured by the sensor group in its different calibration positions and by compiling this raw data with the aim of forming a virtual grid configuration representing the virtual calibration sight plate.

4. A process in accordance with one of claims 1, 2 or 3, for calibration of an acquisition system, wherein the sensor group comprises a lighting system to emit at least one luminous lamellar beam towards the object, and a video device to film the object with a constant parallax in relation to the lighting system beams with the aim of delivering raw data (p, q) according to the columns (p) and lines (q) of the images of the points of the path of each beam on the object or on the calibration sight plate.

5. A calibration process in accordance with claim 4, **characterised in that** an intermediate transfer function N of the following linear form:

$$N \begin{cases} u = F(p,q) = \dfrac{ap + bq + c}{gp + hq + 1} \\[2mm] v = G(p,q) = \dfrac{dp + eq + f}{gp + hq + 1} \\[2mm] w = 0 \end{cases}$$

is calculated, the co-efficients (a-h) being determined by applying the equations to at least four points of the sight plate reliefs, the double line pair (u, v, p, q) thereof being known and memorised, and by resolving the linear system of equations obtained.

6. A calibration process in accordance with claim 4, **characterised in that** an intermediate non-linear transfer function N of the form:

$$
N \begin{cases} u = F(p,q) = \dfrac{\displaystyle\sum_{ij=0}^{n} \alpha_{ij}\, f_i(p)\cdot g_j(q)}{1+\displaystyle\sum_{ij=1}^{n} \gamma_{ij}\, f_i(p)\cdot g_j(q)} \\[4em] v = G(p,q) = \dfrac{\displaystyle\sum_{ij=0}^{n} \beta_{ij}\, f_i(p)\cdot g_j(q)}{1+\displaystyle\sum_{ij=1}^{n} \gamma'_{ij}\, f_i(p)\cdot g_j(q)} \\[4em] w = 0 \end{cases}
$$

is calculated, the functions $f_i$, $g_j$ being a limited development base, the coefficients $\alpha_{ij}$, $\beta_{ij}$, $\gamma_{ij}$, being determined by applying the equations to a number of relief points of the sight plate, at least equal to $\dfrac{1 + 3n(n+3)}{4}$, the double line pair thereof (u, v, p, q) being known and memorised, and by resolving the linear system of equations obtained.

7. A calibration process in accordance with claim 4, **characterised in that** the intermediate transfer function N is calculated by dividing the calibration sight plate into n elementary regions, and calculating an elementary transfer function $N_e$, in accordance with one of claims 5 or 6, for each elementary region (e), the intermediate transfer function N being formed for all the elementary functions applied to their respective elementary regions.

8. A calibration process in accordance with claim 4, **characterised in that** the intermediate transfer function N is calculated by:
   - firstly memorising a linearisation table p'(p, q, q'(p, q) characterising the distortions of the acquisition system,
   - firstly correcting the raw data (p, q) by means of the said linearisation table, with the aim of obtaining corrected data (p', q'),
   - calculating the transfer function N in linear form, conforming to claim 4:

$$N \begin{cases} u = F(p,q) = \dfrac{ap' + bq' + c}{gp' + hq' + 1} \\[2em] v = G(p,q) = \dfrac{dp' + eq' + f}{gp' + hq' + 1} \\[2em] w = 0 \end{cases}$$

9. A calibration process in accordance with one of claims 1 to 8, **characterised in that** the matrix $M_{TC}$ of transfer from the sensor reference frame (U, V, W) to the terminal reference frame is defined by:
   - securing the calibration sight plate on the fixed framework in a known pre-determined position and by memorising the corresponding data;
   - defining and memorising, on the basis of this data, a matrix $M_{AC}$ of transfer from the sensor reference frame (U, V, W) to the absolute reference frame (X, Y, Z) for the calibration position;
   - memorising the matrix $M_{AT}$ delivered by the determination means in the calibration position, the matrix being designated $M_{ATO}$;
   - and by calculating the matrix $M_{TC}$ on the basis of the aforementioned matrices: $M_{TC} = (M_{ATO})^{-1} \cdot M_{AC}$.

10. A calibration process in accordance with one of claims 1 to 8, **characterised in that** the matrix $M_{TC}$ of transfer from the sensor reference frame (U, V, W) to the terminal reference frame (R, S, T) is defined by:
    - carrying out the acquisition of at least one characteristic point of a reference sight plate in $-\ell-$ positions of the sensor group, with the aim of acquiring raw data ($p_l$, $q_l$..., $p_k$, $q_k$... $p_l$, $q_l$) representative of corresponding echoes;
    - calculating, by means of the intermediate transfer function N, the corresponding co-ordinates ($u_l$, $v_l$, $w_l$,... $u_k$, $v_k$, $w_k$... $u_l$, $v_l$, $w_l$) in the sensor reference frame;
    - memorising the matrices $M_{ATl}$..., $M_{ATk}$..., $M_{ATl}$ delivered for each of the acquisition positions by the determination means;
    - resolving the following equation system with the aim of calculating the unknown $M_{TC}$:

$$\begin{vmatrix} x_o \\ y_o \\ z_o \end{vmatrix} = \begin{bmatrix} M_{ATk} \end{bmatrix} \cdot M_{TC} \begin{vmatrix} u_k \\ v_k \\ w_k \end{vmatrix} \qquad 1 \leqslant k \leqslant \ell$$

wherein

$$\begin{vmatrix} x_o \\ y_o \\ z_o \end{vmatrix}$$

are the unknown co-ordinates of the characteristic point of the sight plate, eliminated by substitution in resolving the equation system.

11. A calibration process in accordance with claim 10, **characterised in that** the 1 positions of the sensor group are created on the one hand by a step-by-step rotation of the terminal body about the origin of the terminal reference frame (R, S, T), and on the other hand by a step-by-step displacement parallel to a known axis linked to the said terminal reference frame (R, S, T), in such a manner that the matrix $M_{TC}$ is made up of the position of the origin of the terminal reference frame in the sensor reference frame (U, V, W), and the orientation of the said terminal reference frame in the sensor reference frame, the resolution of the aforementioned system of equations being carried out by subdividing it into two independent sub-systems, one using points delivered by the rotation and giving the position of the said origin, the other using the points delivered by the displacement and giving the orientation of the terminal reference frame (R, S, T).

12. A calibration process in accordance with claims 1 to 10, **characterised in that** the calculation of the intermediate transfer function N and the calculation of the matrix $M_{TC}$ of transfer from the sensor reference frame to the terminal reference frame are each carried out by creating a redundant equation system and resolving it in the sense of the least error squares.

13. A system of shape acquisition capable of delivering co-ordinates (x, y, z) representative of the shape of a three-dimensional object in a reference frame referred to as absolute (X, Y, Z), the said system comprising a fixed framework to which the absolute reference frame is linked, a mobile terminal body to which a reference frame referred to as terminal (R, S, T) is linked, a set of actuators adapted to displace the terminal body in relation to the fixed framework, means (18, 7c, 6a, 6b, 5a), for determining the position and the orientation of the terminal in relation to the fixed framework, capable of memorising a matrix $M_{AT}$ of transfer from the terminal reference frame (R, S, T) to the absolute reference frame (X, Y, Z), a sensor group carried by the terminal body and adapted to emit a structured wave towards the three-dimensional object and to capture the echo returned by the said object, and means for storing the data issued by the sensor group, referred to as raw data representative of the captured echoes, the said system being **characterised in that** it comprises calibration means with the aim of implementing the process in accordance with one of claims 1 to 12, comprising:
   - a calibration sight plate having one or more geometrical reliefs and being of known dimensions;
   - means of securing the calibration sight plate on the framework;
   - memorising means, comprising a storage area for geometrical definition information relative to the calibration sight plate, and a storage area for the matrix $M_{TC}$ of transfer from the sensor reference frame to the terminal reference frame;
   - and a computer adapted and programmed to carry out the transposition, in co-ordinates, of the geometrical definition information, to calculate the intermediate transfer function N, and to calculate by compilation the global transfer function L according to the process in accordance with one of claims 1 to 12.

14. An acquisition system in accordance with claim 13, **characterised in that** the calibration sight plate comprises a plate supplied with a grid configuration of measuring rods.

15. An acquisition system in accordance with claim 13, **characterised in that** the calibration sight plate comprises a single measuring rod.

16. An acquisition system in accordance with one of claims 13, 14 or 15, capable of carrying out calibration according to claim 9, **characterised in that**:
   - the means of securing the calibration sight plate are adapted to ensure securing of the said sight plate in a known predetermined position in relation to the framework;
   - the memorising means comprise a storage area for the corresponding position data of the said sight plate, and a storage area for the matrix $M_{AC}$ of transfer from the sensor reference frame to the absolute reference frame;
   - the computer is adapted and programmed to define the matrix $M_{AC}$ and to calculate the matrix $M_{TC}$ on the basis of the matrices $M_{AC}$ and $M_{ATO}$.

17. An acquisition system in accordance with one of claims 13, 14, 15 or 16 capable of carrying out calibration according to claim 10, **characterised in that**:
   - the said system comprises a reference sight plate having at least one characteristic point, and means for securing the reference sight plate on the framework;
   - the memorising means comprise a storage area for the matrices $M_{ATI}... M_{ATI}$;
   - the computer is adapted and programmed to resolve the equation system to $M_{TC}$.

18. An acquisition system in accordance with claim 17, **characterised in that** the computer is programmed by software for resolution of the equation system to $M_{TC}$, wherein the intermediate transfer function N is calculated by dividing the calibration sight plate into n elementary regions, and an elementary transfer

function $N_e$ is calculated for each elementary region (e), each intermediate transfer function having the following linear form:

$$u_i = \frac{apk + bqk + c}{gpk + hqk + l}$$

$$v_i = \frac{dpk + eqk + f}{gpk + hqk + l}$$

$$w_i = \emptyset$$

the intermediate transfer function N being formed for the total of the elementary functions applied to their respective elementary regions.

19. An acquisition system in accordance with one of claims 13, 14, 15, 16, 17 or 18, wherein the sensor group comprises a lighting system capable of emitting at least one luminous lamellar beam towards the object, and a video device capable of filming the object with a constant parallax in relation to the beams of the lighting system, with the aim of delivering raw data (p, q) according to the columns (p) and the lines (q) of the images of the points of the path of each beam on the object or the calibration sight plate.

20. An acquisition system in accordance with claim 19, **characterised in that** the computer is programmed by software for calculation of the intermediate transfer function:

$$u = F(p,q) = \frac{\displaystyle\sum_{ij=0}^{n} \alpha_{ij}\, f_i(p)\cdot g_j(q)}{1 + \displaystyle\sum_{ij=1}^{n} \gamma_{ij}\, f_i(p)\cdot g_j(q)}$$

$$v = G(p,q) = \frac{\displaystyle\sum_{ij=0}^{n} \beta_{ij}\, f_i(p)\cdot g_j(q)}{1 + \displaystyle\sum_{ij=1}^{n} \gamma_{ij}\, f_i(p)\cdot g_j(q)}$$

$$w = 0$$

the functions $f_i$, $g_j$ being a limited development base, the coefficients $\alpha_{ij}$, $\beta_{ij}$, $\gamma_{ij}$ being determined by applying the equations to a number of relief points on the sight plate, at least equal to $\frac{1 + 3n(n + 3)}{4}$, the double line pair (u, v, p, q) thereof being known and memorised, and by resolving the linear system of equations obtained.

21. An acquisition system in accordance with one of claims 13 to 20, wherein:
   - the set of actuators comprises a kinematic chain of motors, one rigid with the framework and another carrying the terminal body;
   - the means for determining the position and the orientation of the terminal in relation to the fixed framework comprise angular position sensors associated with each motor, means for counting the signals delivered by the sensors, a calculating module programmed to produce the matrix $M_{AT}$ on the basis of the information issued by the aforementioned memorising means and the said counting means, and a storage memory for the said matrix $M_{AT}$.

## Patentansprüche

1. Verfahren zur Eichung eines Systems zur Formerfassung, das in der Lage ist, die Koordinaten (x, y, z), die die Form eines dreidimensionalen Objektes in einem absolut genannten Bezugssystem (X, Y, Z) repräsentieren, auszugeben, wobei das genannte Erfassungssystem ein festes Gehäuse umfaßt, mit dem das absolute Bezugssystem verbunden ist, ein bewegliches Terminalorgan, mit dem ein Terminalsystem genanntes Bezugssystem (R, S, T) verbunden ist, eine Reihe von Betätigungsorganen zur Bewegung des Terminalorgans relativ zum festen Gehäuse, Mittel (18, 7c, 6a, 6b, 5a) zur Bestimmung der Position und der Orientierung des Terminals relativ zum festen Gehäuse, die in der Lage sind, eine Matrix $M_{AT}$ zum Übergang vom Terminalsystem (R, S, T) zum absoluten Bezugssystem (X, Y, Z) zu speichern, eine vom Terminalorgan getragene Sensoreinheit, die dazu eingerichtet ist, einen Strahl bekannter Form zum dreidimensionalen Objekt zu senden und das vom genannten Objekt zurückgeworfene Echo aufzunehmen, und Mittel zur Speicherung der von der Sensoreinheit abgegebenen Informationen, die Rohinformationen genannt werden und die aufgenommenen Echos darstellen, wobei das genannte Eichverfahren es ermöglicht, die globale Übertragungsfunktion L zwischen jeglichem zurückgeworfenen Echo und den entsprechenden absoluten Koordinaten (x, y, z) im absoluten Bezugssystem zu bestimmen, die vom Erfassungssystem ausgegeben werden sollen, und dadurch gekennzeichnet, daß es darin besteht:
   . vorab Informationen geometrischer Art über ein Kalibrierobjekt zu speichern, das ein oder mehrere Reliefs bekannter Geometrie und Abmessungen aufweist,
   . die Form des genannten Kalibrierobjektes mittels der Sensoreinheit zu erfassen, die in mindestens einer bestimmten Position relativ zum genannten Kalibrierobjekt, Eichposition(en) genannt, angeordnet ist, um die entsprechenden Rohinformationen (p, q...), die die von der genannten Sensoreinheit erfaßten Echos darstellen, zu speichern,
   . für jede genannte Eichposition die das Kalibrierobjekt definierenden Informationen in Form von Koordinaten (u, v, w) in ein mit dem Sensor verbundenes und Sensorsystem (U, V, W) genanntes Bezugssystem umzusetzen,
   . aus den Ergebnissen der genannten Erfassung und den das Kalibrierobjekt charakterisierenden Koordinaten (u, v, w) im Sensorsystem eine Zwischentransferfunktion

$$N \begin{cases} u = F\ (p,\ q...) \\ v = G\ (p,\ q...) \\ w = H\ (p,\ q...) \end{cases}$$

   zu berechnen, die die Koordinaten (u, v, w) im Sensorsystem (U, V, W) in Abhängigkeit von den Rohinformationen (p, q) liefert,
   . die Position des Sensorsystems (U, V, W) im Terminalsystem (R, S, T) zu bestimmen und eine Matrix $M_{TC}$ für den Übergang vom Sensorsystem zum Terminalsystem zu speichern,
   . die Zwischentransfertfunktion N mit einerseits der Übergangsmatrix $M_{TC}$ und andererseits der Übergangsmatrix $M_{AT}$ zu multiplizieren und die globale Transfertfunktion L = $M_{AT}.M_{TC}.N$ zu erhalten.

2. Eichverfahren gemäß Patentanspruch 1, dadurch gekennzeichnet, daß ein Kalibrierobjekt verwendet wird, das eine Platte umfaßt, die auf einer Fläche ein Netz aus Meßstäben trägt, und daß als definierende Informationen Koordinaten ($u_k$, $v_k$) gespeichert werden, die mit jedem Meßstab des Kalibrierobjektes in einem Bezugssystem (U, V) verbunden sind, das in der Ebene der Fläche des das Netz aus Meßstäben tragenden Kalibrierobjektes liegt.

3. Eichverfahren gemäß Patentanspruch 1, dadurch gekennzeichnet, daß ein virtuelles Kalibrierobjekt verwendet wird, das aus einem einzigen Meßstab gebildet wird, indem die Sensoreinheit in mehreren bekannten Eichpositionen angeordnet wird, indem als definierende Information Koordinaten ($u_k$, $v_k$) gespeichert werden, die in den verschiedenen Eichpositionen in einem mit der Sensoreinheit verbundenen Bezugssystem (U, V) verbunden sind, indem die die Echos des einzigen Meßstabes, die von der Sensoreinheit in den verschiedenen Eichpositionen erfaßt werden, darstellenden Rohinformationen (p, q...) gespeichert werden und indem diese Rohinformationen zusammengesetzt werden, um ein virtuelles Netz zu bilden, das das virtuelle Kalibrierobjekt darstellt.

4. Verfahren gemäß einem der Patentansprüche 1, 2 oder 3 für die Eichung eines Erfassungssystems, in dem die Sensoreinheit ein Beleuchtungssystem enthält, das in der Lage ist, mindestens einen lamellaren Lichtstrahl zum Objekt zu senden, und ein Videosystem, das in der Lage ist, das Objekt mit einer relativ zum Strahl des Beleuchtungssystems konstanten Parallaxe zu filmen, um Rohinformationen (p, q) in Abhängigkeit von den Spalten (p) und Zeilen (q) der Bilder der Punkte der Spur jedes Lichtstrahles auf dem Objekt oder dem Kalibrierobjekt zu liefern.

5. Eichverfahren gemäß Patentanspruch 4, dadurch gekennzeichnet, daß eine Zwischentransfertfunktion N der folgenden linearen Form berechnet wird:

$$N \begin{cases} u = F\,(p,\,q) = \dfrac{ap + bq + c}{gp + hq + 1} \\[2mm] v = G\,(p,\,q) = \dfrac{dp + eq + f}{gp + hq + 1} \\[2mm] w = 0 \end{cases}$$

wobei die Koeffizienten (a-h) bestimmt werden, indem diese Gleichungen auf mindestens vier Punkte der Reliefs des Kalibrierobjektes angewandt werden, für die das Quadrupel (u, v, p, q) bekannt und gespeichert ist, und das erhaltene lineare Gleichungssystem gelöst wird.

6. Eichverfahren gemäß Patentanspruch 4, dadurch gekennzeichnet, daß eine nichtlineare Zwischentransfertfunktion N der Form

$$N \begin{cases} u = F\,(p,\,q) = \dfrac{\displaystyle\sum_{ij=0}^{n} \alpha_{ij} f_i(p)\cdot g_j(q)}{1 + \displaystyle\sum_{ij=1}^{n} \gamma_{ij} f_i(p)\cdot g_j(q)} \\[6mm] v = G\,(p,\,q) = \dfrac{\displaystyle\sum_{ij=0}^{n} \beta_{ij} f_i(p)\cdot g_j(q)}{1 + \displaystyle\sum_{ij=1}^{n} \gamma_{ij} f_i(p)\cdot g_j(q)} \\[6mm] w = 0 \end{cases}$$

berechnet wird, in der $f_i$, $g_j$ eine beschränkte Entwicklungsbasis ist, die Koeffizienten $\alpha_{ij}$, $\beta_{ij}$, $\gamma_{ij}$ durch Anwendung dieser Gleichungen auf eine Anzahl von Reliefpunkten des Kalibrierobjektes, die mindestens gleich $1 + \dfrac{3n(n+3)}{4}$ ist, für die das Quadrupel (u, v, p, q) bekannt und gespeichert ist, und durch Lösung des erhaltenen linearen Gleichungssystems bestimmt werden.

7. Eichverfahren gemäß Patentanspruch 4, dadurch gekennzeichnet, daß die Zwischentransfertfunktion N berechnet wird, indem das Kalibrierobjekt in n Elementarzonen unterteilt wird und indem für jede Elementarzone (e) eine Elementartransfertfunktion $N_e$ gemäß einem der Patentansprüche 5 oder 6 berechnet wird, wobei die Zwischentransfertfunktion N für die Gesamtheit dieser Elementarfunktionen aufgestellt wird, die auf ihre entsprechenden Elementarzonen angewandt werden.

8. Eichverfahren gemäß Patentanspruch 4, dadurch gekennzeichnet, daß die Zwischentransfertfunktion N berechnet wird,
   - indem vorab eine Linearisierungstabelle p'(p,q), q'(p,q) gespeichert wird, die die Verzerrungen des Erfassungssystems beschreibt,
   - indem vorab die Rohinformationen (p, q) mit Hilfe der genannten Linearisierungstabelle korrigiert werden, um korrigierte Informationen p', q' zu erhalten,
   - indem die Transfertfunktion N in der linearen Form gemäß Patentanspruch 4 berechnet wird:

$$N \begin{cases} u = F\ (p,\ q) = \dfrac{ap' + bq' + c}{gp' + hq' + 1} \\[2mm] v = G\ (p,\ q) = \dfrac{dp' + eq' + f}{gp' + hq' + 1} \\[2mm] w = 0 \end{cases}$$

9. Eichverfahren gemäß einem der Patentansprüche 1 bis 8, dadurch gekennzeichnet, daß die Matrix $M_{TC}$ des Überganges vom Sensorsystem (U, V, W) zum Terminalsystem bestimmt wird,
   . indem das Kalibrierobjekt in einer vorher festgelegten, bekannten Position auf dem festen Gehäuse befestigt wird und die entsprechenden Daten gespeichert werden,
   . indem aufgrund dieser Daten eine Matrix $M_{AC}$ des Überganges vom Sensorsystem (U, V, W) zum absoluten Bezugssystem (X, Y, Z) für die Kalibrierposition bestimmt und gespeichert wird,
   . indem die von den Bestimmungsmitteln in der Kalibrierposition gelieferte Matrix $M_{AT}$ gespeichert wird, die mit $M_{ATO}$ bezeichnet wird,
   . und indem die Matrix $M_{TC}$ aus den oben genannten Matrizen berechnet wird: $M_{TC} = (M_{ATO})^{-1} \cdot M_{AC}$.

10. Eichverfahren gemäß einem der Patentansprüche 1 bis 8, dadurch gekennzeichnet, daß die Matrix $M_{TC}$ des Überganges vom Sensorsystem (U, V, W) zum Terminalsystem (R, S, T) bestimmt wird,
    . indem mindestens ein charakteristischer Punkt eines Bezugsobjektes in $l$ Positionen der Sensoreinheit erfaßt wird, um die die entsprechenden Echos darstellenden Rohinformationen $(p_1, q_1, \dots p_k, q_k, \dots p_l, q_l)$ zu erhalten,
    . indem mittels der Zwischentransfertfunktion N die entsprechenden Koordinaten $(u_1, v_1, w_1, \dots u_k, v_k, w_k, \dots u_l, v_l, w_l)$ im Sensorsystem berechnet werden,
    . indem die für jede der Erfassungspositionen von den Bestimmungsmitteln gelieferten Matrizen $M_{AT1}, \dots M_{ATk}, \dots M_{ATl}$, gespeichert werden,
    . indem das folgende Gleichungssystem gelöst wird, um die Unbekannte $M_{TC}$ zu berechnen:

$$\begin{vmatrix} x_0 \\ y_0 \\ z_0 \end{vmatrix} = \begin{bmatrix} M_{ATk} \end{bmatrix} \cdot M_{TC} \begin{vmatrix} u_k \\ v_k \\ w_k \end{vmatrix} \qquad 1 \le k \le l$$

wo

$$\begin{vmatrix} x_0 \\ y_0 \\ z_0 \end{vmatrix}$$

die unbekannten Koordinaten des charakteristischen Punktes des Kalibrierobjektes sind, die bei der Lösung des Gleichungssystems durch Substitution eliminiert werden.

11. Eichverfahren gemäß Patentanspruch 10, dadurch gekennzeichnet, daß die *l* Positionen der Sensoreinheit einerseits durch eine schrittweise Drehung des Terminalorgans um den Ursprung des Terminalsystems (R, S, T) und andererseits durch eine schrittweise Translationsbewegung parallel zu einer bekannten, mit dem genannten Terminalsystem (R, S, T) verbundenen Achse erhalten werden, so daß die Matrix $M_{TC}$ aus der Position des Ursprunges des Terminalsystems im Sensorsystem (U, V, W) und der Orientierung des genannten Terminalsystems im Sensorsystem gewonnen wird, wobei die Lösung des genannten Gleichungssystems durch dessen Aufteilung in zwei unabhängige Untersysteme erfolgt, von denen das eine die Punkte verwendet, die durch die Drehung geliefert werden und die Position des genannten Ursprungs liefert, während das andere die Punkte verwendet, die durch die Translationsbewegung geliefert werden und die Orientierung des Terminalsystems (R, S, T) liefern.

12. Eichverfahren gemäß Patentansprüchen 1 bis 10, dadurch gekennzeichnet, daß die Berechnung der Zwischentransfertfunktion N und die Berechnung der Matrix $M_{TC}$ des Überganges vom Sensorsystem zum Terminalsystem jeweils durch Aufstellung eines abundanten Gleichungssystems und dessen Lösung im Sinne der kleinsten Quadrate erfolgt.

13. System zur Formerfassung, in der Lage, die Koordinaten (x, y, z), die die Form eines dreidimensionalen Objektes in einem absolut genannten Bezugssystem (X, Y, Z) repräsentieren, auszugeben, wobei das genannte Erfassungssystem ein festes Gehäuse umfaßt, mit dem das absolute Bezugssystem verbunden ist, ein bewegliches Terminalorgan, mit dem ein Terminalsystem genanntes Bezugssystem (R, S, T) verbunden ist, eine Reihe von Betätigungsorganen zur Bewegung des Terminalorgans relativ zum festen Gehäuse, Mittel (18, 7c, 6a, 6b, 5a) zur Bestimmung der Position und der Orientierung des Terminals relativ zum festen Gehäuse, die in der Lage sind, eine Matrix $M_{AT}$ zum Übergang vom Terminalsystem (R, S, T) zum absoluten Bezugssystem (X, Y, Z) zu speichern, eine vom Terminalorgan getragene Sensoreinheit, die dazu eingerichtet ist, eine strukturierte Welle zum dreidimensionalen Objekt zu senden und das vom genannten Objekt zurückgeworfene Echo aufzunehmen, und Mittel zur Speicherung der von der Sensoreinheit abgegebenen Informationen, die Rohinformationen genannt werden und die aufgenommenen Echos darstellen, wobei das genannte System dadurch gekennzeichnet ist, daß es Eichmittel zur Anwendung des Verfahrens gemäß einem der Patentansprüche 1 bis 12 enthält, umfassend:
    - ein Kalibrierobjekt, das ein oder mehrere Reliefs bekannter Geometrie und Abmessungen aufweist,
    - Mittel zur Befestigung des Kalibrierobjektes am Gehäuse,
    - Speichermittel, einen Speicherbereich für die Informationen zur geometrischen Definition des Kalibrierobjektes und einen Speicherbereich für die Matrix $M_{TC}$ des Überganges vom Sensorsystem zum Terminalsystem enthaltend,
    - und einen Rechner, in der Lage und dafür programmiert, die Umsetzung der Informationen zur geometrischen Definition in Koordinaten auszuführen, um die Zwischentransfertfunktion N zu berechnen, und die globale Transfertfunktion L nach dem Verfahren gemäß einem der Patentansprüche 1 bis 12 durch Matrizenmultiplikation zu berechnen.

14. Erfassungssystem gemäß Patentanspruch 13, dadurch gekennzeichnet, daß das Kalibrierobjekt eine Platte umfaßt, die mit einem Netz von Meßstäben versehen ist.

15. Erfassungssystem gemäß Patentanspruch 13, dadurch gekennzeichnet, daß das Kalibrierobjekt einen einzigen Meßstab umfaßt.

16. Erfassungssystem gemäß einem der Patentansprüche 13, 14 oder 15, in der Lage, eine Eichung gemäß Patentanspruch 9 vorzunehmen, dadurch gekennzeichnet, daß:
    . die Mittel zur Befestigung des Kalibrierobjektes dazu eingerichtet sind, die Befestigung des genannten Kalibrierobjektes in einer vorher festgelegten, bekannten Position relativ zum Gehäuse sicherzustellen,
    . die Speichermittel einen Speicherbereich für die entsprechenden Positionsdaten des genannten Kalibrierobjektes umfassen und einen Speicherbereich für die Matrix $M_{AC}$ des Überganges vom Sensorsystem zum absoluten Bezugssystem,
    . der Rechner in der Lage und dafür programmiert ist, die Matrix $M_{AC}$ zu bestimmen und die Matrix $M_{TC}$ aus den Matrizen $M_{AC}$ und $M_{ATO}$ zu berechnen.

17. Erfassungssystem gemäß einem der Patentansprüche 13, 14, 15 oder 16, in der Lage, eine Eichung gemäß Patentanspruch 10 vorzunehmen, dadurch gekennzeichnet, daß:
    . das genannte System ein Bezugsobjekt enthält, das mindestens einen charakteristischen Punkt aufweist und Mittel zur Befestigung des Bezugsobjektes am Gehäuse,

. die Speichermittel einen Speicherbereich für die Matrizen $M_{AT1}$,... $M_{ATl}$ umfassen,

. der Rechner in der Lage und dafür programmiert ist, das Gleichungssystem nach $M_{TC}$ aufzulösen.

18. Erfassungssystem gemäß Patentanspruch 17, dadurch gekennzeichnet, daß der Rechner mit einem Programm zur Auflösung des Gleichungssystems nach $M_{TC}$ programmiert ist, in dem die Zwischentransfertfunktion N durch Aufteilung des Kalibrierobjektes in n Elementarzonen und Berechnung einer elementaren Transfertfunktion $N_e$ für jede Elementarzone (e) berechnet wird, wobei jede Zwischentransfertfunktion die folgende lineare Form hat:

$$u_i = \frac{apk + bqk + c}{gpk + hqk + 1}$$

$$vi = \frac{dpk + eqk + f}{gpk + hqk + 1}$$

$$wi = 0$$

wobei die Zwischentransfertfunktion N für die Gesamtheit dieser auf ihre entsprechenden Elementarzonen angewandten Elementarfunktionen aufgestellt wird.

19. Erfassungssystem gemäß einem der Patentansprüche 13, 14, 15, 16, 17 oder 18, in dem die Sensoreinheit ein Beleuchtungssystem enthält, das dazu in der Lage ist, mindestens einen lamellaren Strahl auf das Objekt zu senden, und ein Videosystem, das dazu in der Lage ist, das Objekt mit einer konstanten Parallaxe relativ zu den Strahlen des Beleuchtungssystems zu filmen, um Rohinformationen (p, q) in Abhängigkeit von den Spalten (p) und Zeilen (q) der Bilder der Punkte der Spur jedes Strahles auf dem Objekt oder dem Kalibrierobjekt zu liefern.

20. Erfassungssystem gemäß Patentanspruch 19, dadurch gekennzeichnet, daß der Rechner mit einem Programm zur Berechnung der Zwischentransfertfunktion

$$N \begin{cases} u = F(p, q) = \dfrac{\displaystyle\sum_{ij=0}^{n} \alpha_{ij} f_i(p) \cdot g_j(q)}{1 + \displaystyle\sum_{ij=1}^{n} \gamma_{ij} f_i(p) \cdot g_j(q)} \\[4em] v = G(p, q) = \dfrac{\displaystyle\sum_{ij=0}^{n} \beta_{ij} f_i(p) \cdot g_j(q)}{1 + \displaystyle\sum_{ij=1}^{n} \gamma_{ij} f_i(p) \cdot g_j(q)} \\[4em] w = 0 \end{cases}$$

programmiert ist, wobei die Funktionen $f_i$, $g_j$ eine beschränkte Entwicklungsbasis darstellen, wobei die Koeffizienten $\alpha_{ij}$, $\beta_{ij}$, $\gamma_{ij}$ durch Anwendung dieser Gleichungen auf eine Anzahl von Reliefpunkten des Kalibrierobjektes, die mindestens gleich $1 + \dfrac{3n(n+3)}{4}$ ist, für die das Quadrupel (u, v, p, q) bekannt und gespeichert ist, und durch Lösung des erhaltenen linearen Gleichungssystems bestimmt werden.

21. Erfassungssystem gemäß einem der Patentansprüche 13 bis 20, in dem
. die Reihe von Betätigungsorganen aus einer kinematischen Kette von Motoren besteht, von denen einer mit dem Gehäuse fest verbunden ist und ein anderer das Terminalorgan trägt,
. die Mittel zur Bestimmung der Position und der Orientierung des Terminals relativ zum festen Gehäuse mit jedem Motor verbundene Sensoren für die Winkelstellung umfassen, Mittel zum Zählen der von den Sensoren abgegebenen Signale, ein Rechenmodul, dafür programmiert, die Matrix $M_{AT}$ aus den Informationen zu bilden, die die oben genannten Speichermittel und die genannten Zählmittel abgeben, und einen Speicher zur Speicherung der genannten Matrix $M_{AT}$.

Fig. 1

Fig 1a

4d

4e

Fig 1b

4f

Fig. 2

Fig. 3

| Trajectoire 5b | → | Actionneur _8.13_ | → | Position 5a | → | Acquisition 7a |

ETALONNAGE

MAT     (p,q)
6b              6d

19

20

21

5c
N

(u,v,w)

5d
MTC

(r,s,t)

5a
$M_{AT}$

(x,y,z)

5e
COR

(x',y',z')

Fig. 4

Fig. 5a

| Trajectoire 5b | → | Actionneur .8.13. | → | Position 5a | → | Acquisition 7a |

6d ⟶ (pk,qk)

6c

Transposition ⟶

$$u_i = \frac{apk + bqk + c}{gpk + hqk + 1}$$

$$v_i = \frac{dpk + eqk + f}{gpk + hqk + 1}$$

$$w_i = \emptyset$$

Résolution système

N (a, b, c, d, e, f, g, h)

Fig. 5b

p

q

Fig 5c

p

q

5e

5f

5g

Fig. 6

Calibration linéaire

K = 1

$(u_k, v_k, w_k)$

$(p_k, q_k)$

6c

6d

$$M \begin{bmatrix} 1,k \end{bmatrix} = p \quad M \begin{bmatrix} 2,k \end{bmatrix} = q \quad M \begin{bmatrix} 3,k \end{bmatrix} = 1$$
$$M \begin{bmatrix} 4,k \end{bmatrix} = 0 \quad M \begin{bmatrix} 5,k \end{bmatrix} = 0 \quad M \begin{bmatrix} 6,k \end{bmatrix} = 0$$
$$M \begin{bmatrix} 7,k \end{bmatrix} = -up \quad M \begin{bmatrix} 8,k \end{bmatrix} = -vp$$
$$M \begin{bmatrix} 1+1,k \end{bmatrix} = 0 \quad M \begin{bmatrix} 1+2,k \end{bmatrix} = 0 \quad M \begin{bmatrix} 1+3,k \end{bmatrix} = 0$$
$$M \begin{bmatrix} 1+4,k \end{bmatrix} = p \quad M \begin{bmatrix} 1+5,k \end{bmatrix} = q \quad M \begin{bmatrix} 1+6,k \end{bmatrix} = 1$$
$$M \begin{bmatrix} 1+7,k \end{bmatrix} = -vp \quad M \begin{bmatrix} 1+8,k \end{bmatrix} = -vq$$

$$Y \begin{bmatrix} k \end{bmatrix} = u \qquad Y \begin{bmatrix} 1+k \end{bmatrix} = v$$

K = K+1

K > L

Système

d'équations

N

$$X = (T_{M.M})^{-1T}.M.Y$$

Résolution

$$a = X \begin{bmatrix} 1 \end{bmatrix}$$
$$b = X \begin{bmatrix} 2 \end{bmatrix}$$
$$c = X \begin{bmatrix} 3 \end{bmatrix}$$
$$d = X \begin{bmatrix} 4 \end{bmatrix}$$
$$e = X \begin{bmatrix} 5 \end{bmatrix}$$
$$f = X \begin{bmatrix} 6 \end{bmatrix}$$
$$g = X \begin{bmatrix} 7 \end{bmatrix}$$
$$h = X \begin{bmatrix} 8 \end{bmatrix}$$

Résultats

FIN

Fig. 7a

```
┌─────────────┐   ┌─────────────┐   ┌──────────┐   ┌─────────────┐
│ Trajectoire │──▶│  Actionneur │──▶│ Position │──▶│ Acquisition │
│     5b      │   │   .8.13.    │   │    5a    │   │     7a      │
└─────────────┘   └─────────────┘   └──────────┘   └─────────────┘
```

$(pk, qk)$

$$u_j = \frac{\sum \alpha_{ij} f_i(pk) g_j(qk)}{\sum \gamma_{ij} f_i(pk) g_j(qk) + 1}$$

Transposition

$$v_j = \frac{\sum \beta_{ij} f_i(pk) g_j(qk)}{\sum \gamma_{ij} f_i(pk) g_j(qk) + 1}$$

$$w_j = \emptyset$$

Résolution système

$$N(\alpha_{ij}, \beta_{ij}, \gamma_{ij})$$

Fig. 7b

p

q

Fig. 8a

Trajectoire 5b → Actionneur .8.13. → Position 5a → Acquisition 7a

( pk,qk )

Echos   zone   z

Transposition →

$$u_i = \frac{apk + bqk + c}{gpk + hqk + 1}$$

$$v_i = \frac{dpk + eqk + f}{gpk + hqk + 1}$$

$$w_i = \emptyset$$

Résolution  système

$Nz(a_z, b_z \cdots\cdots g_z, h_z)$

Zone suivante — Oui

Non

Fig. 8b

p

q

$Nz$

Fig. 9a

Trajectoire
5b
→
Actionneur
.8.13 .
→
Position
5a
→
Acquisition
7a

(pi,qi)

(p,q)

Correction

(p',q')

$$u_i = \frac{ap' + bq' + c}{gp' + hq' + 1}$$

$$v_i = \frac{dp' + cq' + f}{gp' + hq' + 1}$$

$$w_i = \emptyset$$

Transposition

Résolution système

N(a,b,c,d,e,f,g,h )

Fig. 9b

p

q

Fig. 9c

p'

q'

Fig.10

Fig. 11

```
Trajectoire          Actionneur          Position          Acquisition
   5b                   8_13               5a                  7a
```

$[MAT]_k$   (pk, qk)

Rotation

N

$u_k, v_k, w_k$

$$(u_0 - u_k)^2 + (v_0 - v_k)^2 = h_k^2$$

$w_0 = 0$

Translation

N

$u_k, v_k, w_k$

$Su = 0$

$Sv = 0$

$Sw = -1$        $Ru = \cos\theta$

$Rw = 0$        $Rv = \sin\theta$

$Tw = 0$        $Tu = -\sin\theta$

$Tv = \cos\theta$

$$\theta = \frac{\sum\limits_{k=1}^{n} \arctan\frac{v_k}{u_k}}{n}$$

Résolution

$u_0, v_0, w_0$

Résolution

Ru, Rv, Rw, Su, Sv, Sw, Tu, Tv, Tw

$$M_{TC} = \begin{bmatrix} 1 & 0 & 0 & 0 \\ u_0 & Ru & Su & Tu \\ v_0 & Rv & Sv & Tv \\ w_0 & Rw & Sw & Tw \end{bmatrix}$$

Fig.12